(19) **Europäisches Patentamt / European Patent Office / Office européen des brevets**

(11) **EP 4 625 237 A1**

(12) **EUROPEAN PATENT APPLICATION**
published in accordance with Art. 153(4) EPC

(43) Date of publication:
01.10.2025 Bulletin 2025/40

(21) Application number: 22966322.4

(22) Date of filing: 01.12.2022

(51) International Patent Classification (IPC):
$G06F\ 30/23^{(2020.01)}$  $G06F\ 30/18^{(2020.01)}$
$G06F\ 113/14^{(2020.01)}$  $G06F\ 119/14^{(2020.01)}$

(52) Cooperative Patent Classification (CPC):
G06F 3/00; G06F 30/23; G06F 2113/14;
G06F 2119/14

(86) International application number:
PCT/CN2022/135739

(87) International publication number:
WO 2024/108637 (30.05.2024 Gazette 2024/22)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 23.11.2022 CN 202211472307

(71) Applicant: **China Nuclear Power Engineering Co., Ltd.**
**Beijing 100840 (CN)**

(72) Inventors:
• **LIU, Shubin**
**Beijing 100840 (CN)**
• **LIU, Shihua**
**Beijing 100840 (CN)**
• **LIU, Baojun**
**Beijing 100840 (CN)**
• **CHEN, Li**
**Beijing 100840 (CN)**
• **LIU, Jian**
**Beijing 100840 (CN)**
• **BAI, Guoyu**
**Beijing 100840 (CN)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **MECHANICAL CALCULATION METHOD AND APPARATUS FOR PIPELINE HAVING SPECIAL-SHAPED PIPE SECTION, AND ANALYSIS METHOD AND APPARATUS**

(57) The present disclosure provides a mechanics calculation method and apparatus for a pipeline having a special-shaped pipe section. The method includes: generating, according to parameter information all components in the pipeline, a pipe-beam model formed by connecting a plurality of pipe-beam elements; acquiring meshing information of a special-shaped pipe section requiring detailed analysis, and node information of the special-shaped pipe section in the pipe-beam model; generating a mesh model of a special-shaped pipe section formed by joining a plurality of shell elements; replacing, with the mesh model of the special-shaped pipe section, a pipe-beam element at a corresponding position in the pipe-beam model to form a hybrid model; calculating a material density of the special-shaped pipe section to replace a linear density in the parameter information of the special-shaped pipe section, so as to form updated parameter information of the special-shaped pipe section; performing finite element calculation on the hybrid model to obtain a displacement of each node of the hybrid model; and then respectively calculating stresses of the pipe-beam elements and a target shell component. According to the method, calculation and assessment of the pipeline and the special-shaped pipe shell component can be completed in one pass, thereby greatly improving the efficiency and accuracy of pipeline design.

FIG. 1

**Description**

CROSS-REFERENCE TO RELATED APPLICATIONS

The present disclosure claims priority from Chinese patent application No. CN202211472307.2, filed on November 23, 2022, and entitled "Mechanics Calculation Method and Device for Pipeline with Special-Shaped Pipe Section", the entire contents of which are incorporated herein by reference.

TECHNICAL FIELD

The present disclosure relates to the technical field of pipeline design, in particular to a mechanics calculation method, a mechanics calculation apparatus, a mechanics analysis method, and a mechanics analysis apparatus for a pipeline with a special-shaped pipe section, an analysis method and apparatus.

BACKGROUND

The existing types of pipeline calculation software all adopt one-dimensional pipe-beam elements for model calculation, including straight pipe-beam elements and curved pipe-beam elements, which are all linear elements. The pipeline calculation and device calculation are generally performed separately, that is, the pipeline calculation is performed first to obtain the pushing force exerted by the pipeline on the device, then load combination calculation is performed, and then stress analysis calculation and assessment of the device are performed using the combined load. Although there are programs that can use shell elements to perform calculation for special components, the methods for building the shell element component are relatively complicated, some require the node coordinates to be input node by node before a detailed description of each shell element is made. Some methods require a shell element model to be created by using an independent modeling module, and then a main program builds this shell element component into a stiffness matrix, and incorporates the stiffness matrix into a pipeline model for calculation. In the calculation result, only displacements and internal forces of the connecting points at both ends can be obtained for the shell element model. Once the pipeline solution is obtained, the force on the component is added to the device and a separate calculation is performed for the shell element component. It can be seen that the main technical problem of the existing pipeline calculation software is that it cannot create the shell element component with convenience.

The method of placing a shell element component model directly into a "pipeline problem" is in principle workable and can be accomplished by general-purpose finite element programs at present. However, the issue lies in the extremely low work efficiency, which includes: modeling efficiency, technical methods for connecting the pipeline to the shell component, specification processing requirements during the process, and the implementation of specification requirements during the assessment, which are the reasons why the general-purpose finite element software cannot meet the requirements of engineering design, calculation, analysis and application. The techniques involved herein include: user interaction (or called pipeline description method definition); pipeline program calculation, including the correspondence between standard-limited support requirements, calculation methods for specification requirements and pipeline loads; modeling methods for pipeline components (especially for special-shaped pipes); and the correspondence relationship between pipeline elements and shell elements, and the like.

SUMMARY

To overcome the above disadvantages in the existing technology, the present disclosure provides a mechanics calculation method and apparatus for a pipeline with a special-shaped pipe section, which can complete calculation and assessment of a pipeline and a special-shaped pipe shell component in one pass, thereby greatly improving the working efficiency of pipeline design.

The technical solutions adopted for solving the technical problem of the present disclosure are as follows.

The present disclosure provides a mechanics calculation method for a pipeline with a special-shaped pipe section, including:

generating, according to parameter information of all components in the pipeline, a pipe-beam model formed by connecting a plurality of pipe-beam elements, and node information of the respective pipe-beam elements, wherein the components correspond to the pipe-beam elements in a one-to-one manner;

acquiring meshing information of the special-shaped pipe section requiring detailed analysis, and node information of the special-shaped pipe section in the pipe-beam model, and generating a mesh model of the special-shaped pipe section formed by joining a plurality of shell elements, and mesh node information in the mesh model;

replacing, with the mesh model of the special-shaped pipe section, a pipe-beam element at a corresponding position in the pipe-beam model to form a hybrid model;

calculating a material density of the special-shaped pipe section, and replacing a linear density in parameter information of the special-shaped pipe section to form updated parameter information of the special-shaped pipe section;

performing, according to working condition information of a pipeline to be calculated and the parameter information of the respective components in the pipeline, finite element calculation on the hybrid model to obtain a displacement of each node of the hybrid model, calculating nodal internal forces of the pipe-beam elements based on nodal displacements of the pipe-beam elements, calculating stresses of the respective shell elements based on mesh nodal displacements of the mesh model of the special-shaped pipe section; and

calculating stresses of the pipe-beam elements based on the nodal internal forces of the pipe-beam elements.

Optionally, the special-shaped pipe section includes a pipe bend ,
calculating the material density of the special-shaped pipe section, i.e., the pipe bend, specifically comprising:

determining, according to a linear density $w_a$ of the pipe bend, a theoretical material density $w_a'$ of the pipe bend by a formula: $w_a' = w_a/g_a/t_a$, wherein the pipe bend is divided in a circumferential direction such that an end face circle forms N segments of circular arcs, $g_a$ is a length of each of the circular arcs, $g_a = \pi D_a/N$, $t_a$ is a wall thickness of the pipe bend, and $D_a$ is a pipe diameter of the pipe bend;

calculating, according to a number of segments of the pipe bend divided in the circumferential direction, an annular equivalent density factor $fac_a$ of the pipe bend by a formula: $fac_a = g_a/g_a'$, wherein $g_a'$ is a length of a foldline corresponding to each of the circular arcs after the pipe bend is divided in the circumferential direction, $g_a' = 2 D_a \times \sin(180/N)$;

calculating, according to a number n of segments of the pipe bend divided in an axial direction, an axial equivalent density factor $fac_a'$ of the pipe bend, wherein after the pipe bend is divided in the axial direction, n pipe bend segments are formed; a length of a connecting line between center points of a start end face and a tail end face of each pipe bend segment is set as L, wherein $L = 2R \times \sin(\beta/2n)$, R is a bending radius of the pipe bend, $\beta$ is a turning angle of the pipe bend; a circumference of an ellipse of a cross section where an axial midpoint of each pipe bend segment is located is set as 1, wherein a length of the major axis of the ellipse of the cross section is set as a, $a = r$; a length of the minor axis of the ellipse of the cross section is set as b, $b = r \times \cos(\beta/2n)$, and a calculation formula for the axial equivalent density factor $fac_a'$ is: $fac_a' = s/(n \times L \times l)$, wherein s is a surface area of the pipe bend; and

calculating a material density $w_a''$ of the pipe bend according to the following formula:

$$w_a'' = w_a' \times fac_a \times fac_a'.$$

Optionally, the special-shaped pipe section includes a tee having two main pipes and one branch pipe, calculating a material density of the special-shaped pipe section, i.e., the tee, specifically including:

determining, according to a linear density $w_b$ of the main pipe or the branch pipe, a theoretical material density $w_b'$ of the main pipe or the branch pipe by a formula: $w_b' = w_b/g_b/t_b$, wherein the main pipe or the branch pipe is divided in the circumferential direction such that an end face circle of the main pipe or the branch pipe forms a plurality of circular arcs, $g_b$ is a length of each of the circular arcs, $t_b$ is a wall thickness of the main pipe or the branch pipe;

calculating, according to areas of the main pipe or the branch pipe before and after replacement by a main pipe model or a branch pipe model, an area equivalent factor $fac_b$ of the main pipe or the branch pipe by a formula: $fac_b = A/A'$, wherein A is an area calculated before replacement by the main pipe model or the branch pipe model without considering a loss or excess of the area, wherein $A = \pi \times D_b \times L_b$, $D_b$ is a pipe diameter of the main pipe or the branch pipe, $L_b$ is a length of a connecting line from a center of an end circle of the main pipe or the branch pipe to an intersection point of central axes of three pipes of the tee;

A' is an area calculated after replacement by the main pipe model or the branch pipe model considering the loss or excess of the area, wherein A' is specifically a sum of areas of the shell elements of the main pipe or the branch pipe calculated according to mesh node information of the main pipe or the branch pipe in the mesh model; and

calculating a material density of the main pipe or the branch pipe according to the following formula:

$$w_b'' = w_b' \times fac_b.$$

Optionally, the special-shaped pipe section includes a tapered pipe,
calculating a material density of the tapered pipe specifically comprises:

calculating a weight of the tapered pipe $W = w_c \times L_c$;

calculating an average wall thickness of the tapered pipe by a formula: $t_c = (T + t)/2$, wherein T is a wall thickness of a large end of the tapered pipe, t is a wall thickness of a small end of the tapered pipe;

calculating a surface area of the tapered pipe after meshing by a formula:

$$A_c= （R_c+r_c） \sin （360/2N） \times \sqrt{((R_c - r_c)\cos\left(\frac{360}{2N}\right))^2 + L_c^2} \times N_c \ ,$$

wherein $R_c$ is a radius of the large end of the tapered pipe, $r_c$ is a radius of the small end of the tapered pipe, $L_c$ is a length of the tapered pipe, and $N_c$ is a number of segments of the tapered pipe divided in the circumferential direction;

calculating, according to the average wall thickness of the tapered pipe and the surface area of the tapered pipe after meshing, a volume of the tapered pipe by a formula: $V=A_c \times t_c$; and

calculating a material density $w_c'$ of the tapered pipe according to the following formula:

$$w_c' = W/V.$$

Optionally, a node of a pipe-beam element at a connection between the mesh model of the special-shaped pipe section and the pipe-beam element is set as a master node, and nodes of the mesh model of the special-shaped pipe section at the connection between the mesh model of the special-shaped pipe section and the pipe-beam element corresponding to the master node are set as slave nodes;

performing finite element calculation on the hybrid model to obtain a displacement of each node of the hybrid model comprises: calculating only a displacement of the master node at the connection between the mesh model of the special-shaped pipe section and the pipe-beam element;

calculating the stresses of the respective shell elements based on the mesh nodal displacements of the mesh model of the special-shaped pipe section specifically comprises:

calculating displacements of the respective slave nodes corresponding to the master node based on the displacement of the master node;

wherein the displacements of the respective slave nodes and displacements of other mesh nodes of the mesh model of the special-shaped pipe section obtained in the finite element calculation constitute the mesh nodal displacements of the mesh model of the special-shaped pipe section; and

calculating the stresses of the respective shell elements based on the mesh nodal displacements of the mesh model of the special-shaped pipe section.

Optionally, before calculating the displacements of the respective slave nodes corresponding to the master node based on the displacement of the master node, the method further comprises: determining whether a working condition is a non-temperature working condition or a temperature working condition;

if the working condition is determined to be a non-temperature working condition, calculating the displacements of the respective slave nodes corresponding to the master node based on the displacement of the master node using the following formula:

$$d' =d \times a$$

wherein d is the displacement of the master node, d' is the displacements of the slave nodes corresponding to the master node, and a is a transformation matrix for transforming the displacement of the master node to the displacements of the slave nodes;

if the working condition is determined to be a temperature working condition, calculating the displacements of the respective slave nodes corresponding to the master node based on the displacement of the master node using the following formula:

$$d' = d \times (a \times (1+ \text{alf}))$$

wherein alf is a thermal expansion coefficient of a pipeline material.

The present disclosure also provides a mechanics analysis method for a pipeline with a special-shaped pipe section, including:

performing calculation according to the mechanics calculation method for a pipeline with a special-shaped pipe section described above to obtain the stresses of the respective shell elements and the stresses of the respective pipe-beam elements; and

assessing a stress of the pipeline with a special-shaped pipe section according to the stresses of the respective shell elements and the stresses of the respective pipe-beam elements.

The present disclosure also provides a mechanics analysis apparatus for a pipeline with a special-shaped pipe section, including:

a pipe-beam generation module configured to generate, according to parameter information of all components in the pipeline, a pipe-beam model formed by connecting a plurality of pipe-beam elements, and node information of the respective pipe-beam elements, wherein the components correspond to the pipe-beam elements in a one-to-one manner;

a shell generation module configured to acquire meshing information of the special-shaped pipe section requiring detailed analysis, and node information of the special-shaped pipe section in the pipe-beam model, and generating a mesh model of the special-shaped pipe section formed by joining a plurality of shell elements, and mesh node information in the mesh model;

a replacement module configured to replace, with the mesh model of the special-shaped pipe section, a pipe-beam element at a corresponding position in the pipe-beam model to form a hybrid model;

a shell parameter formation module configured to calculate a material density of the special-shaped pipe section and replace a linear density in the parameter information of the special-shaped pipe section, so as to form updated parameter information of the special-shaped pipe section;

a finite element calculation module configured to perform, according to working condition information of a pipeline to be calculated and the parameter information of the respective components in the pipeline, finite element calculation on the hybrid model to obtain a displacement of each node of the hybrid model, calculate nodal internal forces of the pipe-beam elements based on nodal displacements of the pipe-beam elements, and calculate stresses of the respective shell elements based on mesh nodal displacements of the mesh model of the special-shaped pipe section; and

a stress calculation module configured to calculate stresses of the pipe-beam elements based on the nodal internal forces of the pipe-beam elements.

Optionally, the mechanics analysis apparatus further includes an interface module. The interface module is configured to receive the working condition information of the pipeline to be calculated and the parameter information of the respective components, transmit the working condition information of the pipeline to be calculated and the parameter information of the respective components to the pipe-beam generation module and the finite element calculation module, and further transmit the parameter information of the special-shaped pipe section to the shell generation module and the shell parameter formation module; and

the interface module is further configured to receive serial number information and meshing information of the special-shaped pipe section and transmit the serial number information and the meshing information of the special-shaped pipe section to the shell generation module, and further transmit the serial number information of the special-shaped pipe section to the shell parameter formation module.

Optionally, the special-shaped pipe section includes a pipe bend,

the shell parameter formation module calculates a material density of the pipe bend, specifically comprising:

determining, according to a linear density $w_a$ of the pipe bend, a theoretical material density $w_a'$ of the pipe bend by a formula: $w_a' = w_a/g_a/t_a$, wherein the pipe bend is divided in a circumferential direction such that an end face circle forms N segments of circular arcs, $g_a$ is a length of each of the circular arcs, $g_a = \pi D_a/N$, $t_a$ is a wall thickness of the pipe bend, and $D_a$ is a pipe diameter of the pipe bend;

calculating an annular equivalent density factor $fac_a$ of the pipe bend according to a number of segments of the pipe bend divided in the circumferential direction by a formula: $fac_a = g_a/g_a'$, wherein $g_a'$ is a length of a foldline corresponding to each of the circular arcs after the pipe bend is divided in the circumferential direction, $g_a' = 2 D_a \times \sin (180/N)$;

calculating an axial equivalent density factor $fac_a'$ of the pipe bend according to a number of segments of the pipe bend divided in an axial direction, wherein after the pipe bend is divided in the axial direction, n pipe bend segments are formed, a length of a connecting line between center points of a start end face and a tail end face of each pipe bend segment is set as L, wherein $L = 2R \times \sin (\beta/2n)$, R is a bending radius of the pipe bend, $\beta$ is a turning angle of the pipe bend, a circumference of an ellipse of a cross section where an axial midpoint of each pipe bend segment is located is set as 1, wherein a length of a major axis of the ellipse of the cross section is $a = r$, a length of a minor axis of the ellipse of the cross section is $b = r \times \cos (\beta/2n)$, and a calculation formula for the axial equivalent density factor $fac_a'$ is: $fac_a' =$

s/(n × L × 1), wherein s is a surface area of the pipe bend; and
calculating a material density $w_a''$ of the pipe bend according to the following formula:

$$w_a'' = w_a' \times fac_a \times fac_a'.$$

Optionally, the special-shaped pipe section includes a tee,
the shell parameter formation module is further electrically connected to the shell generation module, and is configured to calculate a material density of the tee, specifically comprising:

determining, according to a linear density $w_b$ of a main pipe or a branch pipe, a theoretical material density $w_b'$ of the main pipe or the branch pipe by a calculation formula: $w_b' = w_b/g_b/t_b$, wherein the main pipe or the branch pipe is divided in a circumferential direction such that an end face circle forms a plurality of circular arcs, $g_b$ is a length of each of the circular arcs, $t_b$ is a wall thickness of the main pipe or the branch pipe;
calculating, according to areas of the main pipe or the branch pipe before and after replacement by a main pipe model or a branch pipe model, an area equivalent factor $fac_b$ of the main pipe or the branch pipe by a calculation formula: $fac_b$ = A/A',
wherein A is an area calculated before replacement by the main pipe model or the branch pipe model without considering a loss or excess of the area, wherein A = $\pi \times D_b \times L_b$, $D_b$ is a pipe diameter of the main pipe or the branch pipe, $L_b$ is a length of a connecting line from a center of an end circle of the main pipe or the branch pipe to an intersection point of central axes of three pipes of the tee,

A' is an area calculated after replacement by the main pipe model or the branch pipe model considering the loss or excess of the area, wherein A' is specifically a sum of the areas of the shell elements of the main pipe or the branch pipe calculated according to the mesh node information of the main pipe or the branch pipe in the mesh model; and
calculating a material density of the main pipe or the branch pipe according to the following formula:

$$w_b'' = w_b' \times fac_b.$$

Optionally, the special-shaped pipe section includes a tapered pipe,
the shell parameter formation module is further electrically connected to the shell generation module, and is configured to calculate a material density of the tee, specifically comprising:
calculating a material density of the tapered pipe, specifically comprising:

calculating a weight of the tapered pipe W = $w_c \times L_c$;
calculating an average wall thickness of the tapered pipe by a calculation formula $t_c$ = (T + t)/2, wherein T is a wall thickness of a large end of the tapered pipe, t is a wall thickness of a small end of the tapered pipe;
calculating a surface area of the tapered pipe after meshing by a calculation formula:

$$A_c = (R_c + r_c)\sin(360/2N) \times \sqrt{((R_c - r_c)\cos\left(\tfrac{360}{2N}\right))^2 + L_c^2} \times N_c,$$

wherein $R_c$ is a radius of the large end of the tapered pipe, $r_c$ is a radius of the small end of the tapered pipe, $L_c$ is a length of the tapered pipe, and $N_c$ is a number of segments of the tapered pipe divided in the circumferential direction;
calculating, according to the average wall thickness of the tapered pipe and the surface area of the tapered pipe after meshing, a volume of the tapered pipe: V = $A_c \times t_c$; and
calculating a material density $w_c'$ of the tapered pipe according to the following formula:

$$w_c' = W/V.$$

Optionally, the shell parameter formation module includes a material density calculation module and a parameter update module,

the shell parameter formation module is electrically connected to the interface module, and is configured to determine, according to the linear density of the special-shaped pipe section, a material density of the special-shaped pipe section, and
the parameter update module is electrically connected to the material density calculation module, and is configured to replace the linear density in the parameter information of the special-shaped pipe section with the material density of the special-shaped pipe section to form updated parameter information of the special-shaped pipe section.

Optionally, a node of a pipe-beam element at a connection between the mesh model of the special-shaped pipe section and the pipe-beam element is set as a master node, and nodes of the mesh model of the special-shaped pipe section at the connection between the mesh model of the special-shaped pipe section and the pipe-beam element corresponding to the master node are set as slave nodes,

the finite element calculation module comprises a total nodal displacement calculation module, a mesh nodal displacement formation module, a beam element internal force calculation module, and a shell element stress calculation module,
wherein the total nodal displacement calculation module is configured to perform finite element calculation on the hybrid model to obtain the a displacement of each node of the hybrid model, comprising: calculating only a displacement of the master node at the connection between the mesh model of the special-shaped pipe section and the pipe-beam element;
the mesh nodal displacement formation module is electrically connected to the total nodal displacement calculation module, and is configured to calculate the displacements of the respective slave nodes corresponding to the master node based on the displacement of the master node, and is further configured to aggregate the displacements of the respective slave nodes and displacements of other mesh nodes of the mesh model of the special-shaped pipe section obtained in the finite element calculation to constitute mesh nodal displacements of the mesh model of the special-shaped pipe section;
the beam element internal force calculation module is electrically connected to the total nodal displacement calculation module, and is configured to calculate a nodal internal force of the pipe-beam element based on a nodal displacement of the pipe-beam element; and
the shell element stress calculation module is electrically connected to the mesh nodal displacement formation module, and is configured to calculate the stresses of the respective shell elements based on the mesh nodal displacements of the mesh model of the special-shaped pipe section.

Optionally, the finite element calculation module further comprises a determination module, which is electrically connected between the interface module and the mesh nodal displacement formation module, and is configured to determine whether a working condition is a non-temperature working condition or a temperature working condition;

if the working condition is determined to be a non-temperature working condition, the mesh nodal displacement formation module is triggered to calculate the displacements of the respective slave nodes corresponding to the master node based on the displacement of the master node using the following formula:

$$\mathrm{d'} = \mathrm{d} \times \mathrm{a}$$

wherein d is the displacement of the master node, d' is the displacements of the slave nodes corresponding to the master node, and a is a transformation matrix for transforming the displacement of the master node to the displacements of the slave nodes;
if the working condition is determined to be a temperature working condition, the mesh nodal displacement formation module is triggered to calculate the displacements of the respective slave nodes corresponding to the master node based on the displacement of the master node using the following formula:

$$\mathrm{d'} = \mathrm{d} \times (\mathrm{a} \times (1 + \mathrm{alf}))$$

wherein alf is a thermal expansion coefficient of the pipeline material.

Optionally, the mesh nodal displacement formation module includes a shell slave nodal displacement calculation module and a shell nodal displacement summary module,
the shell slave nodal displacement calculation module is electrically connected to the total nodal displacement calculation module, and is configured to calculate the displacements of the respective slave nodes corresponding to the master node based on the displacement of the master node; the shell nodal displacement summary module is electrically connected to the shell slave nodal displacement calculation module and the total nodal displacement calculation module, and is configured to aggregate the displacements of the respective slave nodes and displacements of other mesh nodes of the mesh model of the special-shaped pipe section obtained in the finite element calculation to constitute the mesh nodal displacements of the mesh model of the special-shaped pipe section.

The present disclosure also provides a mechanics analysis apparatus for a pipeline with a special-shaped pipe section, the mechanics analysis apparatus including the mechanics calculation apparatus described above, and a stress assessment module,

the stress assessment module is electrically connected to the finite element calculation module and the stress calculation module of mechanics calculation apparatus, and is configured to assess a stress of the pipeline with a special-shaped pipe section according to the stresses of the respective shell elements and the stresses of the respective pipe-beam elements.

In the present disclosure, for a special-shaped pipe component requiring detailed mechanical analysis, a finite element mesh model is generated (after meshing, each adjacent four nodes form a shell element) to replace a pipe-beam element at a corresponding position in the pipe-beam model, after the material density of the special-shaped pipe component is determined, finite element calculation is performed on a formed hybrid model to obtain a solution regarding the displacements of the respective nodes in the hybrid model, the nodal internal forces of the pipe-beam elements can be calculated based on the nodal displacements of the beam elements in the hybrid model, then the stresses of the pipe-beam elements are calculated, and the internal forces (namely the stresses) of the respective shell elements can be calculated based on the mesh nodal displacement of the special-shaped pipe section mesh model. Therefore, the present disclosure completes the calculation and assessment of the pipe-beam element and the special-shaped pipe shell component in one pass, without unnecessary conservative combination processing process in the middle, thereby greatly improving the working efficiency of pipeline design. Compared with the methods in which one-dimensional pipe-beam elements are adopted for model calculation, the present disclosure improves the calculation accuracy significantly.

BRIEF DESCRIPTION OF DRAWINGS

FIG. 1 is a flowchart of a mechanics calculation method for a pipeline with a special-shaped pipe section provided by Embodiment 1 of the present disclosure;
FIG. 2 is a schematic diagram illustrating the meshing of a cross section of a pipeline;
FIG. 3 is a schematic diagram illustrating the axial segmentation and meshing of a pipe bend;
FIG. 4 is a cross-sectional view a-a of FIG. 3;
FIG. 5 is a schematic structural view of a tee;
FIG. 6 is a schematic diagram illustrating the calculation of the actual area of a main pipe of the tee;
FIG. 7 is a schematic diagram illustrating the meshing of a tapered pipe;

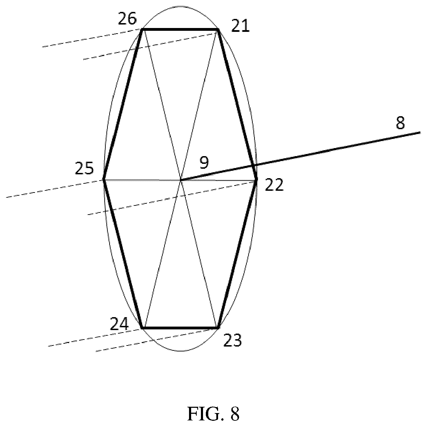

FIG. 8 is a schematic diagram illustrating the master node and slave nodes at the connection face between the pipe-beam element and the shell element;
FIG. 9 is a block diagram of a mechanics calculation apparatus for a pipeline with a special-shaped pipe section according to Embodiment 2 of the present disclosure;
FIG. 10 is a diagram of a model of a pipeline with special-shaped pipe shell components created by the piping program of the present disclosure;
FIG. 11 is a description diagram illustrating the statements in a pipe-beam problem in the pipeline program according to the present disclosure.

DETAIL DESCRIPTION OF EMBODIMENTS

To make those skilled in the art better understand the technical solutions of the present disclosure, the present disclosure will be further described in detail below in conjunction with the accompanying drawings and specific embodiments.

Embodiment 1

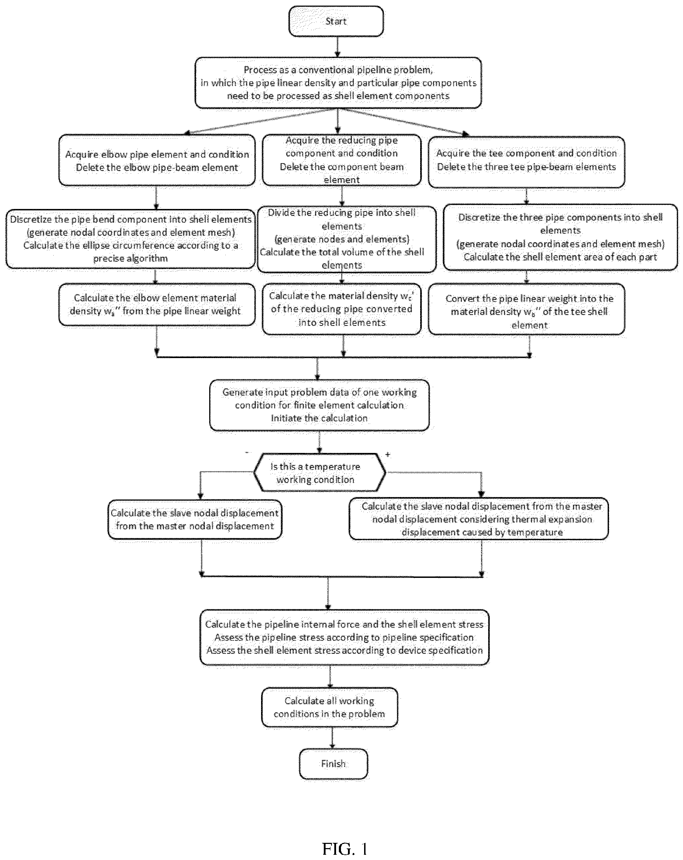

As shown in FIG. 1, the present embodiment provides a mechanics calculation method for a pipeline with a special-shaped pipe section, including:

generating, according to parameter information of all components in the pipeline, a pipe-beam model formed by connecting a plurality of pipe-beam elements, and node information of the respective pipe-beam elements, wherein the components correspond to the pipe-beam elements in a one-to-one manner;
acquiring meshing information of the special-shaped pipe section requiring detailed analysis, and node information of the special-shaped pipe section in the pipe-beam model, and generating a mesh model of the special-shaped pipe section formed by joining a plurality of shell elements, and mesh node information in the mesh model;

replacing, with the mesh model of the special-shaped pipe section, a pipe-beam element at a corresponding position in the pipe-beam model to form a hybrid model;

calculating a material density of the special-shaped pipe section, and replacing a linear density in parameter information of the special-shaped pipe section to form updated parameter information of the special-shaped pipe section;

performing, according to working condition information of a pipeline to be calculated and the parameter information of the respective components in the pipeline, finite element calculation on the hybrid model to obtain a displacement of each node of the hybrid model, calculating nodal internal forces of the pipe-beam elements based on nodal displacements of the pipe-beam elements, calculating stresses of the respective shell elements based on mesh nodal displacements of the mesh model of the special-shaped pipe section; and

calculating stresses of the pipe-beam elements based on the nodal internal forces of the pipe-beam elements.

In the process of engineering design, no matter it is a nuclear power plant, a thermal power plant or a petrochemical project, there are generally a large number of pipes. The analysis and calculation of the pipeline account for a large proportion of the plant design work. The mechanical analysis and calculation regarding the arrangement of the pipes need to be performed using computer software to testify the reasonability of the design. The technology of the present disclosure is one of a number of processes in a computer program algorithm for pipeline calculation. Most of the existing pipeline programs simulate pipelines using one-dimensional beam elements, including straight pipe-beam elements and special-shaped pipe-beam elements (including pipe bends (elbows), tees (T-pipes), tapered pipes and the like), which are all linear elements. The technology of the present disclosure involves technical means to be adopted for satisfying the requirements for finite element calculation on a hybrid model of a pipe beam and a shell element component when converting a special-shaped pipe element into a three-dimensional shell element model.

For a special-shaped pipe component requiring detailed mechanics analysis and calculation, a finite element mesh model is generated (after meshing, each four adjacent nodes form a shell element) to replace the pipe-beam element at a corresponding position in the pipe-beam model, then finite element calculation is carried out on the formed hybrid model to obtain the solution regarding the displacements of the respective nodes in the hybrid model, then the nodal internal forces of the pipe-beam elements can be calculated based on the nodal displacements of the beam elements in the hybrid model, further the stresses of the pipe-beam elements are calculated, and the stresses of the respective shell elements (namely the stress) can be calculated based on the mesh nodal displacements of the mesh model of the special-shaped pipe section. Therefore, the present disclosure completes the calculation and assessment of the pipe-beam element and the special-shaped pipe shell component in one pass, without any unnecessary conservative combination processing in the middle, thereby greatly improving the working efficiency of pipeline design. Compared with the methods in which one-dimensional pipe-beam elements are adopted for model calculation, the present disclosure improves the calculation accuracy significantly.

To address the defects prevailing in the existing pipeline programs, the present disclosure provides the pipeline mechanics calculation method described above. By adding simple input requirements into the data of the original pipeline calculation problem, the pipeline program automatically converts a special-shaped pipe section such as a one-dimensional curved beam element elbow (note: although being referred to herein as one-dimensional linear element, it actually describes a partial circular ring with a known bending radius of a pipe having a diameter) into a three-dimensional shell element model. The original pipe bend element has only three nodes (start point, end point and reference point). After the conversion, there may be hundreds of or thousands of nodes, with every four adjacent nodes being sequentially connected end to end to form one shell element, and a plurality of shell elements being joined to form a three-dimensional shell element model.

Herein the process of discretizing a smooth circular ring pipeline into a finite number of three-dimensional shell elements here is a pre-processing meshing technology of a finite element program, which is a well-known technology in the art. The end of the beam element is a node, while the end of the shell element is a plane composed of a plurality of nodes, and the technique of associating one node with a plane composed of a plurality of nodes is also a known technique in the art. The present disclosure integrates these technologies into a modeling module of a pipeline calculation program, and the model automatically created by such method can automatically calculate the pipe-beam element and the shell element simultaneously in the pipeline calculation process. To achieve this function, the structure of the program needs to meet the functional requirements of various elements, and here to also meet the various requirements for pipeline and shell element calculations. Provided herein are a pipe beam processing and a method for connecting the pipe beam and the shell component, and also a precise method for mass density conversion when converting a component in the pipeline into a shell element.

When converting the pipeline into a shell element, the material density of the target shell component needs to be determined. For the pipeline model, all programs on the market require a linear density of the pipe to be given, including the weight of the pipeline material, typically steel, the weight of the working medium, and the weight of the thermal insulation material. While for the calculation on the shell element, the difference is that what needs to be given is the material density of the target shell component. When performing weight calculation, the program generally multiplies the area of the shell by the thickness and then by the material density to obtain the weight of the shell element.

When calculating the material density of the target shell component from the linear weight provided by the pipeline, a general algorithm is to divide the linear density of a unit length by the pipe circumference and the pipe thickness as the material density of the target shell component. The problem of doing so is that the result is not accurate enough, and a large error would occur especially when the number of division segments is not large. Therefore, the applicant initially proposes the following processing method:

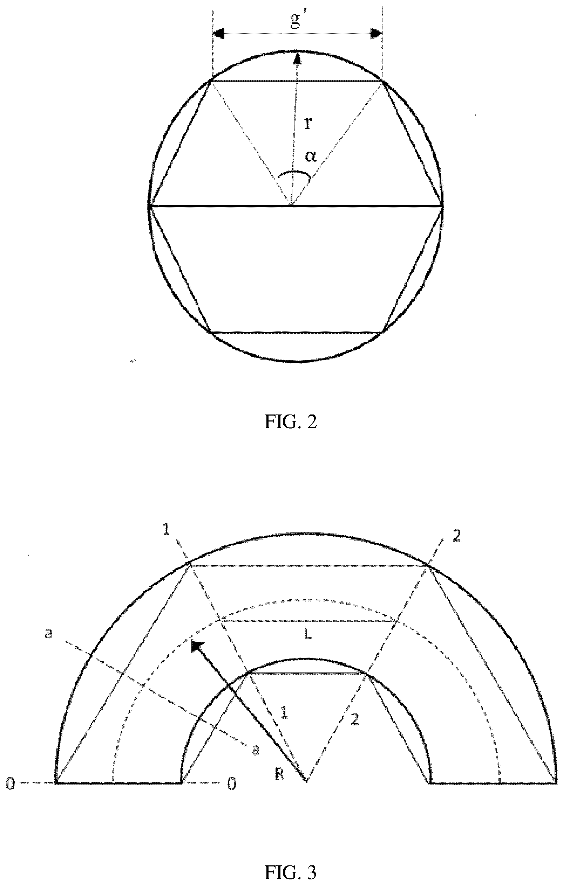

The cross section of the pipe is as shown in FIG. 2, in which the circle is a schematic view of a mid-surface of the pipeline, here the wall thickness of the pipeline is omitted, and the radius of the mid-surface is R. The pattern of the pipe being divided into six segments in the circumferential direction is as follows. The length L is the length of one side of the shell element, that is, the length of a foldline after division.

If a round pipe is divided into six segments in the circumferential direction, 360/6=60, thus $\alpha$=60 degrees for one segment. As can be seen from the figure, the length g' of a foldline is smaller than the length g of a corresponding arc of an actual pipe, where the arc length $g = 2 \times r \times \pi \times 60/360 = r \times \pi/3$. The foldline length $g' = r \times \sin(30) \times 2 = r$. The ratio of the arc length to the foldline length is $\pi/3 = 1.047198$. When applied to a pipe that is divided into any number of segments in the circumferential direction, the algorithm for converting the pipeline material density from a given pipe linear density w is as follows:

the density of the arc segment is: $w' = w/g/t$, where w here is the given pipe linear density, and t is the pipe wall thickness;

the length of the arc segment is: $g = D \times \pi/N$, where D is the pipe diameter, N is the number of segments, $\pi = 3.1415926$;

the length of the corresponding foldline segment is: $g' = (D/2 \times \sin(2 \times \pi/N/2)) \times 2 = D/\sin(\pi/N)$;

according to the relation between g and g': $fac = g/g' = D \times \pi/N/(D/\sin(\pi/N)) = \pi/N/\sin(\pi/N)$; and

the shell element density is: $w'' = w' \times fac$.

Previous studies by the applicant show that by processing the shell element density in such way, the calculated pipe weight is correct no matter how many segments the pipe is divided in the circumferential direction. However, for special-shaped pipes, such as elbows (pipe bends), tees (T-pipes), tapered pipes, etc., the processing method has the defect that the weight of the model after conversion is changed relative to the weight of the pipe-beam model before the conversion. Study and analysis show that the reason for the weight difference of the elbow shell element model is that the weight of the pipe bend element is equal to the linear weight of the pipe multiplied by the arc length of the elbow. Based on the shell element density calculated by the processing method described above, the weight of the shell element elbow obtained after taking the shell element area into account is smaller than the actual weight of the elbow. The reason for such error is that when the elbow is discretized into small rectangular plane units, not only the curve in the circumferential (annular) direction is changed to a foldline, but also the curve in the axial direction is changed to a foldline. For an elbow, when the bending profile of the elbow pipe is changed from a smooth curve to a foldline, the cross section of the pipe is also changed accordingly, which factor must be taken into account when performing shell element density conversion. As for components such as tapered pipes (also called reducing pipes), tees (also called T-pipes) and the like, they also need to be modified adaptively, and the processing method described above cannot be used directly.

In this embodiment, the special-shaped pipe section includes a pipe bend, parameter information of the pipe bend includes:

node information of the pipe bend in the pipe-beam model, including node numbers and coordinate values of the start and end nodes and the reference node,

calculating the material density of the pipe bend, specifically including:

determining, according to a linear density $w_a$ of the pipe bend, a theoretical material density $w_a'$ of the pipe bend by a formula: $w_a' = w_a/g_a/t_a$, wherein the pipe bend is divided in a circumferential direction such that an end face circle forms N segments of circular arcs, $g_a$ is a length of each of the circular arcs, $g_a = \pi D_a/N$, $t_a$ is a wall thickness of the pipe bend, and $D_a$ is a pipe diameter of the pipe bend;

calculating an annular equivalent density factor $fac_a$ of the pipe bend according to a number of segments of the pipe bend divided in the circumferential direction by a formula: $fac_a = g_a/g_a'$, wherein $g_a'$ is a length of a foldline corresponding to each of the circular arcs after the pipe bend is divided in the circumferential direction, $g_a' = 2 D_a \times \sin(180/N)$;

calculating an axial equivalent density factor $fac_a'$ of the pipe bend according to a number of segments of the pipe bend divided in an axial direction, wherein after the pipe bend is divided in the axial direction, n pipe bend segments are formed, a length of a connecting line between center points of a start end face and a tail end face of each pipe bend segment is set as L, wherein L = 2R × sin (β/2n), R is a bending radius of the pipe bend, β is a turning angle of the pipe bend, a circumference of an ellipse of a cross section where an axial midpoint of each pipe bend segment is located is set as 1, wherein a length of the major axis of the ellipse of the cross section is a = r, a length of the minor axis of the ellipse of the cross section is b = r × cos (β/2n), and a calculation formula for the axial equivalent density factor $fac_a'$ is: $fac_a'$ = s/(n × L × 1), wherein s is a surface area of the pipe bend; and calculating a material density $w_a''$ of the pipe bend according to the following formula:

$$w_a'' = w_a' \times fac_a \times fac_a'$$

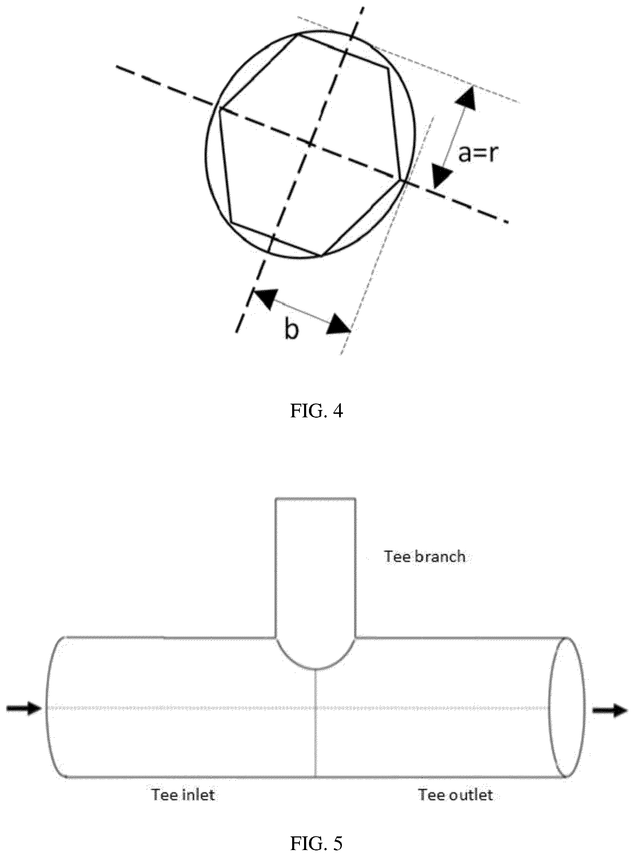

The process of calculating and analyzing the material density $w_a'$ of the pipe bend is as follows:
When converting a curved pipeline into a shell element, the material density of the shell element needs to be determined. As for the pipeline model, all programs on the market require a linear density of the pipe to be given, including the weight of the pipeline material, typically steel, the weight of the working medium, and the weight of the thermal insulation material. While for the calculation of the shell element, the difference is that what needs to be given is the material density of the shell component. When performing weight calculation, the program generally multiplies the area of the shell by the thickness and then by the material density to obtain the weight of one shell element. When calculating the material density of the shell component from the linear weight provided by the pipeline, the general algorithm is to divide the linear density of a unit length by the pipe circumference and the pipe thickness as the material density of the target shell component. The problem of doing so is that the result is not accurate enough, and a large error would occur especially when the number of division segments is not large, and the problem is more complex for a pipe bend. If the pipe bend is as shown in FIG. 3:
Assuming the 180-degree rotated pipe bend is divided into three segments for processing, as shown in FIG. 3. First, for the division in the circumferential direction (assuming that the pipe bend has been divided into six segments, which are not shown in the figure), such case has been considered in the analysis shown in FIG. 2, which is a case where the pipe is divided in the circumferential direction. Here only the case of division in the axial direction is analyzed. It is assumed that the 180-degree elbow is divided into three segments to make shell element models. When the program performs meshing, assuming that the pipe is divided into 6 segments in the circumferential direction, the node coordinates are obtained only at two cross sections 0-0 and 1-1, which are circular, while the cross section a-a is not a circular section any more but an ellipse, as shown in FIG. 4. The semi-major axis of the ellipse is the radius r of the pipe, while the length of the semi-minor axis is related to the number of segments in the axial direction.

$$L = 2R \times \sin(\beta/2n), \ a = r, \ b = r \times \cos(\beta/2n).$$

In FIG. 3, the length of each foldline in the axial direction is L: 2R × sin (60/2) = R, and the length of a corresponding $arc = R \times \pi/3$. $b = r \times \cos(60/2) = \sqrt{3}r/2$.

Hence, the material density of the pipe bend should have a factor $fac_a'$ = smooth area/ foldline area = smooth area/ (ellipse circumference × total foldline length).

The circumference of the ellipse cannot be described by a simple elementary mathematical expression. An expression with higher precision below can be used to obtain the circumference of the ellipse at the cross section a-a of the elbow:

$$\text{Ellipse circumference } l = \pi \times q \left(1 + \frac{3h}{10+\sqrt{4-3h}}\right) \times (1 + mn),$$

where q = a + b, $h = \left(\frac{a-b}{a+b}\right)^2$, $m = \frac{22}{7\pi} - 1$, $n = \left(\frac{a-b}{a}\right)^{33.697}$.

To conclude, the first step is to obtain the shell element material density according to the above analysis on the straight pipe: $w_a'' = w_a' \times fac_a$.

This is the result of analysis on the density of the straight pipe shell element.

The second step is to obtain the density of the elbow shell element based on a combination with the above processing after the cross section of the pipe is changed into an ellipse: $w_a'' = w_a' \times fac_a \times fac_a'$ :

$fac_a'$ = smooth area of elbow s/foldline area of elbow = smooth area s/(ellipse circumference l × total length of foldline n × L) = s/(n × L × 1).

In this embodiment, the special-shaped pipe section includes a tee,

parameter information of the tee includes:

node information of the tee in the pipe-beam model, including node numbers and coordinate values of the node where the branch pipe and the two main pipes are intersected and node numbers and coordinate values of the respective end nodes of the branch pipe and the two main pipes,
calculating the material density of the special-shaped pipe section, specifically includes:

determining, according to a linear density $w_b$ of a main pipe or a branch pipe, a theoretical material density $w_b'$ of the main pipe or the branch pipe by a calculation formula: $w_b' = w_b/g_b/t_b$, where the main pipe or the branch pipe is divided in a circumferential direction such that an end face circle forms a plurality of circular arcs, $g_b$ is a length of each of the circular arcs, $t_b$ is a wall thickness of the main pipe or the branch pipe;
calculating, according to areas of the main pipe or the branch pipe before and after replacement by a main pipe model or a branch pipe model, an area equivalent factor $fac_b$ of the main pipe or the branch pipe by a calculation formula: $fac_b = A/A'$,
where A is an area calculated before replacement by the main pipe model or the branch pipe model without considering a loss or excess of the area, where $A = \pi \times D_b \times L_b$, $D_b$ is a pipe diameter of the main pipe or the branch pipe, $L_b$ is a length of a connecting line from a center of an end circle of the main pipe or the branch pipe to an intersection point of central axes of three pipes of the tee,
A' is an area calculated after replacement by the main pipe model or the branch pipe model considering the loss or excess of the area, wherein A' is specifically a sum of the areas of the shell elements of the main pipe or the branch pipe calculated according to the mesh node information of the main pipe or the branch pipe in the mesh model; and
calculating a material density of the main pipe or the branch pipe according to the following formula:

$$w_b'' = w_b' \times fac_b.$$

For a tee, as shown in FIG. 5, since material is lacking at the connection between the branch pipe and the main pipes after the tee is made into a shell element model, the weight of the pipe tee cannot be correctly described using either of the two calculation methods described above (for the straight pipe and elbow). The shell element density must be calculated with the number of segments of the shell element taken into account according to the conditions of modeling. Here, two problems are present, one is that the curve at the connection between the main pipes and the branch pipe is changed into a straight line during discretization, and the other is that the number of division segments of the main pipes and the branch pipe may be different, which problems need to be taken into account during area calculation.

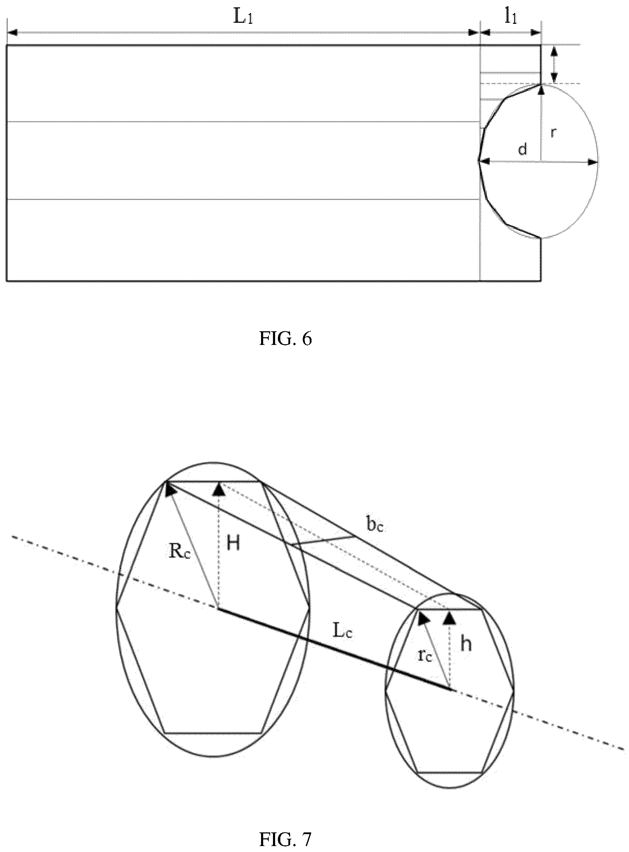

For the main pipes, the number of segments of the branch pipe needs to be considered, as shown in FIG. 6. For convenience of explanation, the main pipe shown in the figure is divided into 6 segments in the circumferential direction (only three segments are shown in the figure), which should be considered when calculating the areas of the main pipes. The material is lacking at the connection between the main pipes and the branch pipe, which needs to be considered when performing area calculation. The whole branch pipe is divided into 12 segments, and only 6 segments need to be considered in the figure (the other 6 segments are intersected with another main pipe). When calculating the area of the main pipe, the pipe may be divided into two parts, with one part having a length $L_1$ and the other part having a length $l_1$, where the diameter of the branch pipe defines the demarcation point, $l_1 = d/2$. The area of the part L is calculated as a normal straight pipe (circumferential hexagonal perimeter $\times$ $L_1$), and the area of the portion below r of part $l_1$ is also calculated as a normal straight pipe ((circumferential hexagonal perimeter/2) $\times l_1$). For the portion below r, the coordinates of the apex of each shell element need to be calculated point by point, so as to obtain the average height and area of each trapezoid. The coordinate values of the respective nodes of the main pipe may also be directly called for calculation to obtain the sum of the areas of the respective shell elements of the main pipe.

In the problems of any previous pipeline programs, the pipeline linear density of a tee is described by the same method as that for a straight pipe. The calculation of the weight of the tee in the problem is simple, i.e., length multiplied by linear weight. When calculating the density of a tee shell element, the calculation will be based on the area A obtained according to calculation as a pipe-beam element, $A = D \times \pi \times (L_1 + l_1)$, the actual total area A' is calculated after considering the number of segments of the main pipe shell elements and the branch pipe shell elements divided at this time, and then the material density wb" = wb' $\times$ A/ A'. The algorithm for A' is obtained by calculation according to the two methods described above.

As for the branch pipe, since material is added to the connection between the branch pipe and the main pipes, the influence of such factor needs to be considered during the calculation. The calculation method refers to the above two calculation methods for the main pipe, which will not be described herein again.

In this embodiment, the special-shaped pipe section includes a tapered pipe,
the parameter information of the tapered pipe includes:

node information of the tapered pipe in the pipe-beam model, including node numbers and coordinate values of the start and end nodes,
calculating a material density of the tapered pipe, specifically including:

calculating a weight of the tapered pipe $W = w_c \times L_c$,
calculating an average wall thickness of the tapered pipe by a calculation formula $t_c = (T + t)/2$, where T is a wall thickness of a large end of the tapered pipe, t is a wall thickness of a small end of the tapered pipe;
calculating a surface area of the tapered pipe after meshing by a calculation formula:

$$A_c = (R_c + r_c)\sin(360/2N) \times \sqrt{\left((R_c - r_c)\cos\left(\frac{360}{2N}\right)\right)^2 + L_c^2} \times N_c,$$

where $R_c$ is a radius of the large end of the tapered pipe, $r_c$ is a radius of the small end of the tapered pipe, $L_c$ is a length of the tapered pipe, and $N_c$ is a number of segments of the tapered pipe divided in the circumferential direction;
calculating, according to the average wall thickness of the tapered pipe and the surface area of the tapered pipe after meshing, a volume of the tapered pipe: $V = A_c \times t_c$; and
calculating a material density $w_c'$ of the tapered pipe according to the following formula:

$$w_c' = W/V.$$

For a tapered pipe (also called a reducing pipe), although the algorithm is in principle looks like that for the straight pipe, it is actually not the truth. When calculating the length of the shell element, in addition to considering according to an average wall thickness and an average diameter, the length of the shell element is not the length of the reducer pipe element as input by the user, i.e., $L_c$ in FIG. 7.
As shown in FIG. 7, the wall thickness of the reducing pipe may be calculated as an average of the wall thickness of the large end and the wall thickness of the small end: $t_c = (T + t)/2$. The linear weight of the present component is always given in the input data of the pipeline program, and its calculated weight W is equal to the product of the linear weight and the length of the component: $W = w_c \times L_c$. When converted into shell element material density, the required total volume of the shell element is V, and the shell element density = W/V. When divided into shell elements, the number of segments along the circumferential direction would influence the result. The volume of each segment is calculated by multiplying the calculated area of each segment by the average wall thickness. The width of each segment is calculated by the average width b, and the length of the segment is neither $L_c$ nor the length of the intersection line of two segments but the length C of the midline (illustrated by a dotted line in the figure) dividing the section in the figure. The length C is as follows:

$$C = \sqrt{(H - h)^2 + L_c^2},$$

where, $H = R_c \cos(360/2N)$, $h = r_c \cos(360/2N)$,
$A = a_c \times N$, $a_c = b_c \times C$, $b = (R_c + r_c)\sin(360/2N)$, $a_c$ is an area of one segment, N is a number of segments of the tapered pipe divided in the circumferential direction.
Therefore, for a reducer, with its weight W being known, the volume of the reducer after being divided into shells is calculated as follows: $V = A_c \times t_c$, and the material density of the reducer is: shell element density = W/V.
In the this embodiment, a node of a pipe-beam element at a connection between the mesh model of the special-shaped pipe section and the pipe-beam element is set as a master node, and nodes of the mesh model of the special-shaped pipe section at the connection between the mesh model of the special-shaped pipe section and the pipe-beam element corresponding to the master node are set as slave nodes;

performing finite element calculation on the hybrid model to obtain a displacement of each node of the hybrid model includes: calculating only a displacement of the master node at the connection between the mesh model of the special-shaped pipe section and the pipe-beam element,
calculating the stresses of the respective shell elements based on the mesh nodal displacements of the mesh model of the special-shaped pipe section specifically includes:

calculating displacements of the respective slave nodes corresponding to the master node based on the displacement of the master node;
the displacements of the respective slave nodes and displacements of other mesh nodes of the mesh model of the special-shaped pipe section obtained in the finite element calculation constitute the mesh nodal displacements of the mesh model of the special-shaped pipe section; and

calculating the stresses of the respective shell elements based on the mesh nodal displacements of the mesh model of the special-shaped pipe section.

When making a pipeline model, if one segment of the pipeline needs to be processed as a shell element component, processing needs to be performed on the connections between this section of pipeline and the pipeline sections connected to both ends of this section of pipeline. It is assumed that the cross section at any position of the pipeline is always a plane and this plane is rigid, which is a basic assumption when calculating a pipeline problem based on beam elements. Therefore, there is only a location for one node (set as node n) at the end point of a one-dimensional pipeline segment, what connected to it is modified into a shell element component where there is no node, but there are a ring of nodes along the outer diameter of the pipeline at this position, which ring of nodes are not independent, and the displacements of these nodes are completely determined by the node n. For example, FIG. 3 shows the case of the connection between the pipe beam and the shell element, where the nodes 8 and 9 constitute a pipe-beam element, which is a one-dimensional linear element. The numerals 21 to 26 denote a ring of nodes on the peripheral edge of the shell element. The solutions regarding the displacements of these nodes are not lying in the displacement unknowns in the structural equation of the finite element model, but are indirectly obtained from the displacement of the node 9. A general solution process usually terminates at this step. But the result is not complete enough for a temperature load, as the thermal expansion effect of the rigid plane is missing. The influence of thermal expansion may be taken into account when calculating the displacements of the slave nodes. Since each slave node would be affected by thermal expansion, the corresponding length R is changed accordingly.

In this embodiment, before calculating the displacements of the respective slave nodes corresponding to the master node based on the displacement of the master node, the method further includes: determining whether a working condition is a non-temperature working condition or a temperature working condition;

if the working condition is determined to be a non-temperature working condition, the displacements of the respective slave nodes corresponding to the master node are calculated based on the displacement of the master node using the following formula:

$$d' = d \times a$$

where d is the displacement of the master node, d' is the displacements of the slave nodes corresponding to the master node, and a is a transformation matrix for transforming the displacement of the master node to the displacements of the slave nodes;

if the working condition is determined to be a temperature working condition, the displacements of the respective slave nodes corresponding to the master node are calculated based on the displacement of the master node using the following formula:

$$d' = d \times (a \times (1 + alf))$$

where alf is a thermal expansion coefficient of the pipeline material.

The master node and the slave nodes thereof mentioned above form a rigid plane. Since this rigid plane does not deform, the above result is correct for normal load solutions, but is problematic for temperature loads. For a pipe-beam model, the circumferential thermal expansion of the pipeline cannot be obtained if only the thermal expansion along the axial direction is considered during the program calculation, whereas for a shell element component, after a temperature load is applied, not only the thermal expansion displacement in the axial direction but also the thermal expansion displacement in the circumferential direction can be obtained for the shell element component part. At this time, an unreal result will occur at the connection between the pipe-beam element and the shell element component due to the rigid plane. For this reason, the influence of thermal displacements of the respective slave nodes needs to be considered. In a case where the temperature effect is not considered, the value of the displacement of the slave nodes is equal to the value of the displacement of the master node transferred to a corresponding position: d' = d × a, when the thermal expansion displacement needs to be considered: d' = d × (a × (1+ alf)), where alf is the thermal expansion coefficient of the material.

The existing pipeline calculation and analysis software cannot directly put a pipeline element and a pipeline component described by the shell element component together for analysis and calculation. The pipeline calculation needs to be carried out according to various calculation working conditions, such as a dead-weight working condition, a temperature working condition, and an earthquake working condition. Different working conditions have different operational condition levels as well as different assessment criteria, which are reflected in different specification formulas. In pipeline assessment, many coefficients are used in the formulas, and the bending moment of the pipe beam obtained from pipeline calculation is directly substituted into a specification formula, hence the pipe-beam element does not need to directly obtain the actual stress. The limit value required by the specification assessment is the allowable stress. The program needs to perform corresponding calculation considering various factors such as the welding, the component type, the loading cycles and the like. Regarding the influence of these conditions, some are considered based on the factors given by the specification, such as the weld seam factor, which is related to the welding process and the connecting components. Some conservative factors are present here, which are inevitable when using pipe beams for calculation.

As for a device made of shell elements, stress is directly used for assessment. The stress, however is classified into membrane stress, bending stress, membrane and bending stress, and the like, which is related not only to the nature of the load but also to the assessment position. The pipeline calculation program realized by adopting the current technology of the present disclosure can complete the calculation of the pipeline and the device components in one pass with convenience. The weight of the component model of the elbow shell element obtained according to this technology is completely consistent with the weight of the pipe beam, without any calculation discrepancy, which is very important for dynamic analysis, this is because the result of dynamic response for the problem (generally, using the response spectrum method for analysis) is closely related to the mode shape, while the mode of the pipeline problem is closely related to the mass distribution of the model. Another technology is to equate the density of the special-shaped pipe-beam element to that of the shell element. This technology can ensure that the weight calculated from these components is completely consistent with the pipeline problem, meeting the requirements for calculation of the whole problem. The requirements for pipeline assessment can naturally be met, while the element stress including the membrane stress and the bending stress can be directly obtained for the shell element. The effect of the software developed by these two technologies is that the local result is more real than that obtained by conventional software, and the calculation and assessment of the pipeline and the device component can be completed in one pass. Since the method to use the program is quite simple, the working efficiency is greatly improved. Meanwhile, the conservatism in the design is greatly removed, so that the design and construction of the pipeline and the whole engineering project are more economical and efficient.

The specific implementation is carried out with the aid of computer software, and the following implementation steps refer to an implementation process of any computer pipeline design and calculation software adopting the technology of the present disclosure.

First, a conventional pipeline calculation is carried out, in which a pipe-beam element is generated according to a pipeline problem to be calculated, which step is a conventional pipeline calculation step and is irrelevant to the present disclosure. However, it is a prerequisite for the technology of the present disclosure. The problem includes an elbow, a tee and/or a tapered pipe. To use the technology of the present disclosure, the first thing is to define how to determine the shell element component in the problem, and the elbow, the inlet and outlet of the tee, and the branch pipe need to be distinguished.

2) When the pipe bend element is required to be calculated as a shell element, the software needs to determine the nodes of the original start and end points, the numbers of the reference node, and the coordinate values of the respective nodes of this element, and various information such as the diameter, the bending radius, the material, the temperature, the pressure and the like of the pipeline element. The next step is to create a model file for finite element solution, in which various information of the shell element is to be included, and the corresponding pipe bend beam element needs to be canceled.

3) For a tee, whether it is a main pipe or a branch pipe should be defined, and also to be defined is the number of elements to be divided of the three parts, where the three elements must be logically connected together. The three tee pipe-beam elements need to be cancelled from the problem.

4) Shell element mesh node coordinates and element number groups are generated between the coordinates of the start and end points in the second step to describe the shell element here, and the types of the shell element components are marked to distinguish a straight pipe element or a pipe bend element, and also to distinguish the main pipes or the branch pipe of the tee.

5) The pipe bend element is meshed into N segments in the circumferential direction and n segments in the axial direction to obtain quality correction factors $fac_a$ and $fac_a$'. In a conventional pipe description file, the linear density of a pipe is always defined when defining the cross section of the pipe, and the general dimension is mass per unit length, such as kilogram per meter. Whereas in shell element calculation, the material density of the shell element is required, and in the model conversion process, the principle to be ensured is that the weight of the component converted into shell elements is consistent with the weight of the pipeline element as originally input. The original pipe weight is $W$ = pipe length $\times$ pipe linear weight. For the shell model of this pipeline, the sum of the shell area is theoretically equal to the area of the cylindrical side surface of the pipeline element. Whereas for a pipe bend, the mass correction factors $fac_a$ and $fac_a$' need to be added.

6) For a tee, the material density of the shell element is calculated according to the inlet, outlet and branch pipe of the tee, i.e. wb " = wb' $\times$ A/A'.

7) A finite element file for pipeline calculation is prepared, the finite element calculation is initiated for each calculation working condition, and a finite element equation set is solved by a program.

8) The stress calculation for the pipeline element and the shell element is completed simultaneously and the stress assessment for the pipeline element and the shell element is sequentially performed according to pipe specification and device specification, respectively.

A theoretical value of material density of the pipe bend shell element can be obtained according to the above step 5). In practice, however, each shell element is a planar surface, which is different from a curved surface of the cylindrical surface of a pipe. Thus a theoretical density of the pipe surface can be calculated by: $wa' = wa/(D \times \pi)/t$. Considering that the curved surface is replaced by a planar surface for the shell element, the above theoretical density needs to be multiplied by a factor $fac_a$, where $fac_a = \pi/N/\sin(\pi/N)$. The reason for multiplication by a factor $fac_a$ is that the surface area is reduced when the shell element is made, thus the pipeline density needs to be scaled up. In addition, the influence of the change of the cross section of the pipeline to an ellipse also needs to be considered, thus finally: $wa'' = wa' \times fac_a'$:

$fac_a'$ = elbow smooth area / elbow foldline area = smooth area/(ellipse circumference $\times$ foldline total length).

In the above step 6), when calculating the material density of the tee, the calculation is performed according to the area of the pipe beam of the tee and the total area of the shell element. Then the material density calculated from the linear weight of the pipeline is converted into the material density of the shell element tee $wb'' = wb' \times A/A'$, where A is the area of the cylindrical side surface of the main pipe beam of the tee, and A' is the total area of the actual main pipe of the tee after divided into shell elements. The algorithm for the branch pipe of the tee is similar to that for the main pipe.

Embodiment 2

This embodiment provides a mechanics analysis method for a pipeline with a special-shaped pipe section, including:

calculating the stresses of the respective shell elements and the stresses of the respective pipe-beam elements by a mechanics calculation method for a pipeline with a special-shaped pipe section according to Embodiment 1, and assessing a stress of the pipeline with a special-shaped pipe section according to the stresses of the respective shell elements and the stresses of the respective pipe-beam elements.

Embodiment 3

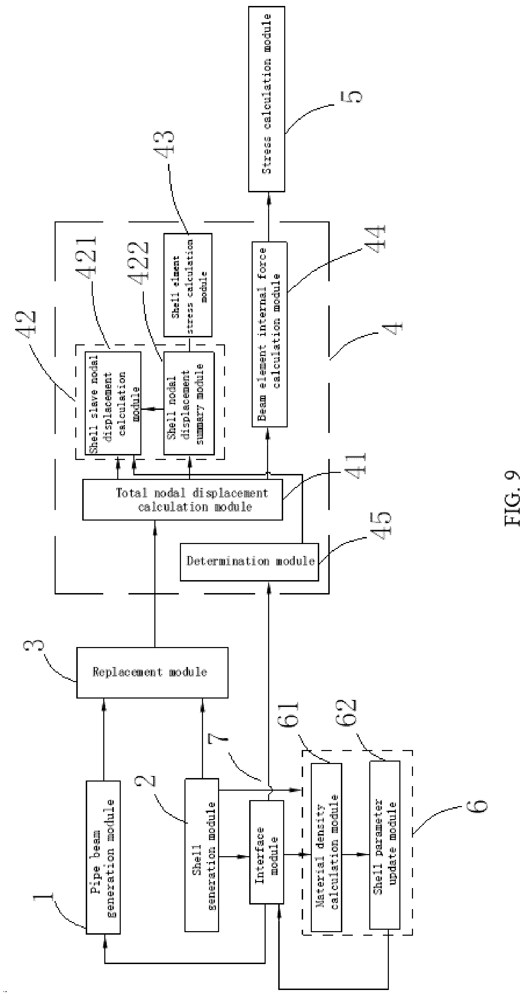

As shown in FIG. 9, the present disclosure also provides a mechanics calculation apparatus for a pipeline with a special-shaped pipe section, including:

a pipe-beam generation module 1 configured to generate, according to parameter information of all components in the pipeline, a pipe-beam model formed by connecting a plurality of pipe-beam elements, and node information of the respective pipe-beam elements, where the components correspond to the pipe-beam elements in a one-to-one manner,

a shell generation module 2 configured to acquire meshing information of the special-shaped pipe section requiring detailed analysis, and node information of the special-shaped pipe section in the pipe-beam model, and generating a mesh model of the special-shaped pipe section formed by joining a plurality of shell elements, and mesh node information in the mesh model;

a replacement module 3 configured to replace, with the mesh model of the special-shaped pipe section, a pipe-beam element at a corresponding position in the pipe-beam model to form a hybrid model;

a shell parameter formation module 6 configured to calculate a material density of the special-shaped pipe section and replace a linear density in the parameter information of the special-shaped pipe section, so as to form updated parameter information of the special-shaped pipe section;

a finite element calculation module 4 configured to perform, according to working condition information of a pipeline to be calculated and the parameter information of the respective components in the pipeline, finite element calculation on the hybrid model to obtain a displacement of each node of the hybrid model, calculate nodal internal forces of the pipe-beam elements based on nodal displacements of the pipe-beam elements, and calculate stresses of the respective shell elements based on mesh nodal displacements of the mesh model of the special-shaped pipe section; and

a stress calculation module 5 configured to calculate stresses of the pipe-beam elements based on the nodal internal forces of the pipe-beam elements.

In this embodiment, the apparatus further includes an interface module 7. The interface module 7 is configured to receive the working condition information of the pipeline to be calculated and the parameter information of the respective components, and transmit the working condition information of the pipeline to be calculated and the parameter information of the respective components to the pipe-beam generation module 1 and the finite element calculation module 4, and further transmit the parameter information of the special-shaped pipe section to the shell generation module 2 and the shell parameter formation module 6; and

The interface module 7 is further configured to receive serial number information and meshing information of the special-shaped pipe section and transmit the serial number information and the meshing information of the special-shaped pipe section to the shell generation module, and further transmit the serial number information of the special-shaped pipe section to the shell parameter formation module 6.

In this embodiment, the special-shaped pipe section includes a pipe bend,
the parameter information of the special-shaped pipe section includes:

node information of the pipe bend in the pipe-beam model, including node numbers and coordinate values of the start and end nodes and the reference node,
the shell parameter formation module 6 calculates the material density of the pipe bend, specifically including:

determining, according to a linear density $w_a$ of the pipe bend, a theoretical material density $w_a$' of the pipe bend by a formula: $w_a$' = $w_a/g_a/t_a$, where the pipe bend is divided in a circumferential direction such that an end face circle forms N segments of circular arcs, $g_a$ is a length of each of the circular arcs, $g_a = \pi D_a/N$, $t_a$ is a wall thickness of the pipe bend, and $D_a$ is a pipe diameter of the pipe bend;
calculating, according to a number of segments of the pipe bend divided in the circumferential direction, an annular equivalent density factor $fac_a$ of the pipe bend by a formula: $fac_a = g_a/g_a$', wherein $g_a$' is a length of a foldline corresponding to each of the circular arcs after the pipe bend is divided in the circumferential direction, $g_a$' =2 $D_a \times$ sin (180/N);
calculating, according to a number of segments of the pipe bend divided in an axial direction, an axial equivalent density factor $fac_a$' of the pipe bend, the pipe bend is divided in the axial direction such that n pipe bend segments are formed, where a length of a connecting line between center points of a start end face and a tail end face of each pipe bend segment is set as L, L = 2R $\times$ sin ($\beta/2n$), R is a bending radius of the pipe bend, $\beta$ is a turning angle of the pipe bend, a circumference of an ellipse of a cross section where an axial midpoint of each pipe bend segment is located is set as 1, a length of a major axis of the ellipse of the cross section is a = r, a length of a minor axis of the ellipse of the cross section is b = r $\times$ cos ($\beta/2n$), and a calculation formula for the axial equivalent density factor $fac_a$' is: $fac_a$' = s/(n $\times$ L $\times$ 1), where s is a surface area of the pipe bend; and
calculating a material density $w_a$" of the pipe bend according to the following formula:

$$w_a'' = w_a' \times fac_a \times fac_a'.$$

In this embodiment, the special-shaped pipe section includes a tee,
the parameter information of the tee includes:

node information of the tee in the pipe-beam model, including node numbers and coordinate values of the node where the branch pipe and the two main pipes are intersected and node numbers and coordinate values of end nodes of the branch pipe and the two main pipes,
the shell parameter formation module 6 is further electrically connected to the shell generation module 2 and is configured to calculate a material density of the tee, specifically including:

determining, according to a linear density $w_b$ of a main pipe or a branch pipe, a theoretical material density $w_b$' of the main pipe or the branch pipe by a calculation formula: $w_b$' = $w_b/g_b/t_b$, where the main pipe or the branch pipe is divided in a circumferential direction such that an end face circle forms a plurality of circular arcs, $g_b$ is a length of each of the circular arcs, $t_b$ is a wall thickness of the main pipe or the branch pipe;
calculating, according to areas of the main pipe or the branch pipe before and after replacement by a main pipe model or a branch pipe model, an area equivalent factor $fac_b$ of the main pipe or the branch pipe by a calculation formula: $fac_b$ = A/A',
where A is an area calculated before replacement by the main pipe model or the branch pipe model without considering a loss or excess of the area, where A = $\pi \times D_b \times L_b$, $D_b$ is a pipe diameter of the main pipe or the branch pipe, $L_b$ is a length of a connecting line from a center of an end circle of the main pipe or the branch pipe to an intersection point of central axes of three pipes of the tee,
A' is an area calculated after replacement by the main pipe model or the branch pipe model considering the loss or excess of the area, wherein A' is specifically a sum of the areas of the shell elements of the main pipe or the branch pipe calculated according to the mesh node information of the main pipe or the branch pipe in the mesh model; and calculating a material density of the main pipe or the branch pipe according to the following formula:

$$\mathrm{w_b}'' = \mathrm{w_b}' \times \mathrm{fac_b}.$$

In this embodiment, the special-shaped pipe section includes a tapered pipe, parameter information of the tapered pipe includes:

node information of the tapered in the pipe-beam model, including node numbers and coordinate values of the start and end nodes,
the parameter forming module 6 calculates a material density of the tapered pipe, specifically including:

calculating a weight of the tapered pipe $W = w_c \times L$,
calculating an average wall thickness of the tapered pipe by a calculation formula $t_c = (T + t)/2$, where T is a wall thickness of a large end of the tapered pipe, t is a wall thickness of a small end of the tapered pipe;
calculating a surface area of the tapered pipe after meshing by a calculation formula:

$$A_c = 2 \ (R_c + r_c) \ \sin \ (360/2N) \ \times \ \sqrt{((R_c - r_c)\cos\left(\frac{360}{2N}\right))^2 + L^2} \times N_c,$$

where $R_c$ is a radius of the large end of the tapered pipe, $r_c$ is a radius of the small end of the tapered pipe, L is a length of the tapered pipe, and $N_c$ is a number of segments of the tapered pipe divided in the circumferential direction;
calculating, according to the average wall thickness of the tapered pipe and the surface area of the tapered pipe after meshing, a volume of the tapered pipe: $V = A_c \times t_c$; and
calculating a material density $w_c'$ of the tapered pipe according to the following formula:

$$\mathrm{w_c}' = \mathrm{W/V}.$$

In this embodiment, the shell parameter formation module 6 includes a material density calculation module 61 and a parameter update module 62,

the shell parameter formation module 61 is electrically connected to the interface module 7, and is configured to determine, according to the linear density of the special-shaped pipe section, a material density of the special-shaped pipe section, and
the parameter update module 62 is electrically connected to the material density calculation module 61, and is configured to replace the linear density in the parameter information of the special-shaped pipe section with the material density of the special-shaped pipe section, so as to form updated parameter information of the special-shaped pipe section.

In this embodiment, a node of a pipe-beam element at a connection between the mesh model of the special-shaped pipe section and the pipe-beam element is set as a master node, and nodes of the mesh model of the special-shaped pipe section at the connection between the mesh model of the special-shaped pipe section and the pipe-beam element corresponding to the master node are set as slave nodes,

the finite element calculation module 4 includes a total nodal displacement calculation module 41, a mesh nodal displacement formation module 42, a beam element internal force calculation module 44, and a shell element stress calculation module 43,
the total nodal displacement calculation module 41 is configured to perform finite element calculation on the hybrid model to obtain a displacement of each node of the hybrid model, including: calculating only a displacement of the master node at the connection between the mesh model of the special-shaped pipe section and the pipe-beam element;
the mesh nodal displacement formation module 42 is electrically connected to the total nodal displacement calculation module 41, and is configured to calculate the displacements of the respective slave nodes corresponding to the master node based on the displacement of the master node, and is further configured to aggregate the displacements of the respective slave nodes and displacements of other mesh nodes of the mesh model of the special-shaped pipe section obtained in the finite element calculation to constitute mesh nodal displacements of the mesh model of the special-shaped pipe section,

the beam element internal force calculation module 44 is electrically connected to the total nodal displacement calculation module 41, and is configured to calculate nodal internal forces of the pipe-beam elements based on nodal displacements of the pipe-beam elements;

the shell element stress calculation module 43 is electrically connected to the mesh nodal displacement formation module 42, and is configured to calculate the stresses of the respective shell elements based on the mesh nodal displacements of the mesh model of the special-shaped pipe section.

In this embodiment, the finite element computation module 4 further includes a determination module 45, which is electrically connected between the interface module 7 and the mesh nodal displacement formation module 42, and is configured to determine whether a working condition is a non-temperature working condition or a temperature working condition;

if the working condition is determined to be a non-temperature working condition, the mesh nodal displacement formation module is triggered to calculate the displacements of the respective slave nodes corresponding to the master node based on the displacement of the master node using the following formula:

$$\mathrm{d'} = \mathrm{d} \times \mathrm{a}$$

where d is the displacement of the master node, d' is the displacements of the slave nodes corresponding to the master node, and a is a transformation matrix for transforming the displacement of the master node to the displacements of the slave nodes;

if the working condition is determined to be a temperature working condition, the mesh nodal displacement formation module is triggered to calculate the displacements of the respective slave nodes corresponding to the master node based on the displacement of the master node using the following formula:

$$\mathrm{d'} = \mathrm{d} \times (\mathrm{a} \times (1 + \mathrm{alf}))$$

where alf is a thermal expansion coefficient of the pipeline material.

In this embodiment, the mesh nodal displacement formation module 42 includes a shell slave nodal displacement calculation module 421 and a shell nodal displacement summary module 422,

the shell slave nodal displacement calculation module 421 is electrically connected to the total nodal displacement calculation module 41, and is configured to calculate the displacements of the respective slave nodes corresponding to the master node based on the displacement of the master node, the shell nodal displacement summary module 422 is electrically connected to the shell slave nodal displacement calculation module 421 and the total nodal displacement calculation module 41, and is configured to aggregate the displacements of the respective slave nodes and displacements of other mesh nodes of the mesh model of the special-shaped pipe section obtained in the finite element calculation to constitute the mesh nodal displacements of the mesh model of the special-shaped pipe section.

Embodiment 4

This embodiment provides a mechanics analysis apparatus for a pipeline with a special-shaped pipe section, including the mechanics calculation apparatus of Embodiment 3, and a stress assessment module.

The stress assessment module is electrically connected to the finite element calculation module and the stress calculation module of mechanics calculation apparatus, and is configured to assess a stress of the pipeline with a special-shaped pipe section according to the stresses of the respective shell elements and the stresses of the respective pipe-beam elements.

Application Example

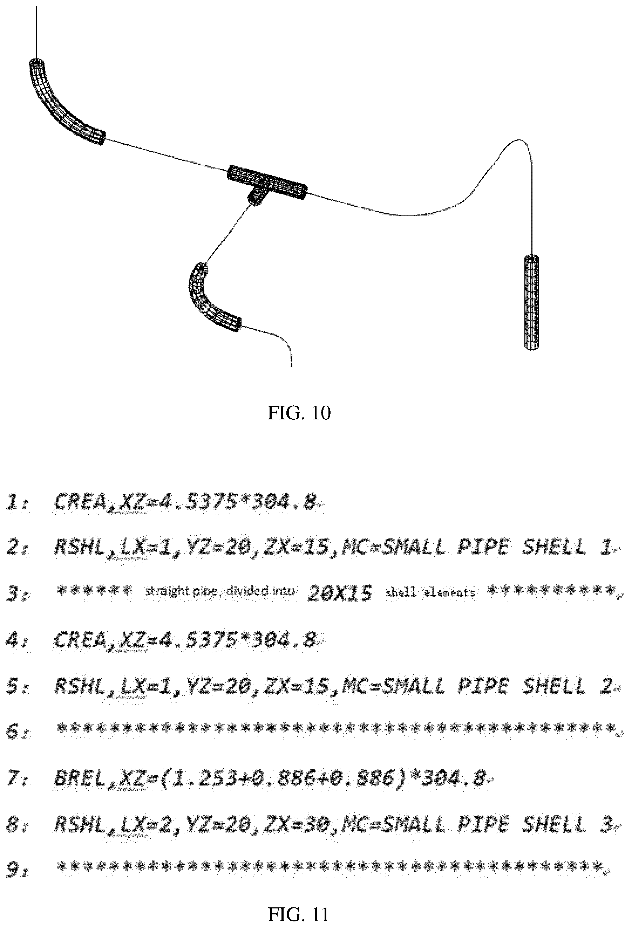

For a problem established according to the technology of the present disclosure, the calculations of various devices and components with shell elements can be generated with convenience, and these calculations are completed in one pass as shown in FIG. 10.

The total weight obtained by calculation according to the shell element-based model is completely consistent with the mass in the pipe-beam problem. What's more, the calculations for the respective working conditions here are completed in one pass, and the stress assessment for the pipe-beam element and the shell element under each working condition can be automatically completed at one time.

The generation and calculation of the shell element component can be achieved by only one simple statement. With the statement removed, the problem remains a pipe-beam problem; with the statement added, the problem contains a shell element component. For example, as shown in FIG. 11, partial data of a problem is as follows, the second and the fifth statements are as follows: RSHL, LX =1, which indicates that this is a straight pipe, and needs to be calculated as a shell element. The eighth statement is RSHL, LX =2, which requires the previous elbow element to be calculated as a shell element. With these three statements removed or with a symbol "*" added, the problem will totally be a pipe-beam problem, which requires no modification.

Importantly, the shell model converted into a stiffness matrix in the existing program capable of performing shell element calculation cannot be used for calculating temperature and internal pressure, whereas static force and dynamic force calculation cannot be realized by using only one stiffness matrix, thus it has the advantage of high calculation speed. Each time the integral calculation is performed, no work relevant to the shell element needs to be done except for considering the stiffness matrix. However, it also has a big flaw, for example, although computer time is saved, trouble is brought to the analyst, since analysis needs to be done for setting up the model, and the assessment needs to be carried out step by step, and the loads need to be simplified, etc. The present disclosure solves the above problems very well.

It should be understood that above embodiments are just examples for illustrating the principle of the present disclosure, however, the present disclosure is not limited thereto. Various modifications and variations can be made by a person skilled in the art without departing from the spirit and the scope of the present disclosure. These modifications and variations should be considered to be within protection scope of the present disclosure.

**Claims**

1. A mechanics calculation method for a pipeline with a special-shaped pipe section, comprising:

   generating, according to parameter information of all components in the pipeline, a pipe-beam model formed by connecting a plurality of pipe-beam elements, and node information of the respective pipe-beam elements, wherein the components correspond to the pipe-beam elements in a one-to-one manner;
   acquiring meshing information of the special-shaped pipe section requiring detailed analysis, and node information of the special-shaped pipe section in the pipe-beam model, and generating a mesh model of the special-shaped pipe section formed by joining a plurality of shell elements, and mesh node information in the mesh model;
   replacing, with the mesh model of the special-shaped pipe section, a pipe-beam element at a corresponding position in the pipe-beam model to form a hybrid model;
   calculating a material density of the special-shaped pipe section, and replacing a linear density in parameter information of the special-shaped pipe section to form updated parameter information of the special-shaped pipe section;
   performing, according to working condition information of a pipeline to be calculated and the parameter information of the respective components in the pipeline, finite element calculation on the hybrid model to obtain a displacement of each node of the hybrid model; calculating nodal internal forces of the pipe-beam elements based on nodal displacements of the pipe-beam elements; and calculating stresses of the respective shell elements based on mesh nodal displacements of the mesh model of the special-shaped pipe section; and calculating stresses of the pipe-beam elements based on the nodal internal forces of the pipe-beam elements.

2. The mechanics calculation method of claim 1, wherein the special-shaped pipe section comprises a pipe bend, and calculating a material density of the pipe bend comprises:

   determining, according to a linear density $w_a$ of the pipe bend, a theoretical material density $w_a'$ of the pipe bend by a formula: $w_a' = w_a/g_a/t_a$, wherein the pipe bend is divided in a circumferential direction such that an end face circle forms N segments of circular arcs, wherein $g_a$ is a length of each of the circular arcs, $g_a = \pi D_a/N$, $t_a$ is a wall thickness of the pipe bend, and $D_a$ is a pipe diameter of the pipe bend;
   calculating, according to a number of segments of the pipe bend divided in the circumferential direction, an annular equivalent density factor $fac_a$ of the pipe bend by a formula: $fac_a = g_a/g_a'$, wherein $g_a'$ is a length of a foldline corresponding to each of the circular arcs after the pipe bend is divided in the circumferential direction, $g_a' = 2 D_a \times \sin (180/N)$;
   calculating, according to a number of segments of the pipe bend divided in an axial direction, an axial equivalent density factor $fac_a'$ of the pipe bend, wherein after the pipe bend is divided in the axial direction, n pipe bend segments are formed, a length of a connecting line between center points of a start end face and a tail end face of each pipe bend segment is set as L, wherein $L = 2R \times \sin (\beta/2n)$, R is a bending radius of the pipe bend, $\beta$ is a

turning angle of the pipe bend, a circumference of an ellipse of a cross section where an axial midpoint of each pipe bend segment is located is set as 1, wherein a length of a major axis of the ellipse of the cross section is a = r, a length of a minor axis of the ellipse of the cross section is b = r $\times$ cos ($\beta$/2n), and a calculation formula for the axial equivalent density factor $fac_a$' is: $fac_a$' = s/(n $\times$ L $\times$ 1), wherein s is a surface area of the pipe bend; and calculating a material density $w_a$" of the pipe bend according to the following formula:

$$w_a'' = w_a' \times fac_a \times fac_a'.$$

3. The mechanics calculation method of claim 1, wherein the special-shaped pipe section comprises a tee, parameter information of the tee comprises:
calculating a material density of the tee, specifically comprising:

determining, according to a linear density $w_b$ of a main pipe or a branch pipe of the tee, a theoretical material density $w_b$' of the main pipe or the branch pipe by a formula: $w_b$' = $w_b$/$g_b$/$t_b$, wherein the main pipe or the branch pipe is divided in the circumferential direction such that an end face circle of the main pipe or the branch pipe forms a plurality of circular arcs, $g_b$ is a length of each of the circular arcs, $t_b$ is a wall thickness of the main pipe or the branch pipe;
calculating, according to areas of the main pipe or the branch pipe before and after replacement by a main pipe model or a branch pipe model, an area equivalent factor $fac_b$ of the main pipe or the branch pipe by a formula: $fac_b$ = A/A',
wherein A is an area calculated before replacement by the main pipe model or the branch pipe model without considering a loss or excess of the area, wherein A = $\pi \times D_b \times L_b$, $D_b$ is a pipe diameter of the main pipe or the branch pipe, $L_b$ is a length of a connecting line from a center of an end circle of the main pipe or the branch pipe to an intersection point of central axes of three pipes of the tee;
A' is an area calculated after replacement by the main pipe model or the branch pipe model considering the loss or excess of the area, wherein A' is specifically a sum of areas of the shell elements of the main pipe or the branch pipe calculated according to mesh node information of the main pipe or the branch pipe in the mesh model; and
calculating a material density of the main pipe or the branch pipe according to the following formula:

$$w_b'' = w_b' \times fac_b.$$

4. The mechanics calculation method of claim 1, wherein the special-shaped pipe section comprises a tapered pipe, calculating a material density of the tapered pipe comprises:

calculating a weight of the tapered pipe W = $w_c \times L_c$;
calculating an average wall thickness of the tapered pipe by a formula: $t_c$ = (T + t)/2, wherein T is a wall thickness of a large end of the tapered pipe, t is a wall thickness of a small end of the tapered pipe;
calculating a surface area of the tapered pipe after meshing by a formula:

$$A_c = (R_c + r_c) \sin (360/2N) \times \sqrt{((R_c - r_c)\cos\left(\frac{360}{2N}\right))^2 + L_c^2} \times N_c \,,$$

wherein $R_c$ is a radius of the large end of the tapered pipe, $r_c$ is a radius of a small end of the tapered pipe, $L_c$ is a length of the tapered pipe, and $N_c$ is a number of segments of the tapered pipe divided in the circumferential direction;
calculating, according to the average wall thickness of the tapered pipe and the surface area of the tapered pipe after meshing, a volume of the tapered pipe by a formula: V = $A_c \times t_c$; and
calculating a material density $w_c$' of the tapered pipe according to the following formula:

$$w_c' = W/V.$$

5. The mechanics calculation method of any one of claims 1 to 4, further comprising: setting a node of a pipe-beam element at a connection between the mesh model of the special-shaped pipe section and the pipe-beam element as a master node, and nodes of the mesh model of the special-shaped pipe section at the connection between the mesh model of the special-shaped pipe section and the pipe-beam element corresponding to the master node as slave nodes; wherein

performing finite element calculation on the hybrid model to obtain a displacement of each node of the hybrid model comprises: calculating only a displacement of the master node at the connection between the mesh model of the special-shaped pipe section and the pipe-beam element;
calculating the stresses of the respective shell elements based on the mesh nodal displacements of the mesh model of the special-shaped pipe section comprises:

> calculating displacements of the respective slave nodes corresponding to the master node based on the displacement of the master node;
> wherein the displacements of the respective slave nodes and displacements of other mesh nodes of the mesh model of the special-shaped pipe section obtained in the finite element calculation constitute the mesh nodal displacements of the mesh model of the special-shaped pipe section; and
> calculating the stresses of the respective shell elements based on the mesh nodal displacements of the mesh model of the special-shaped pipe section.

6. The mechanics calculation method of claim 5, wherein before calculating the displacements of the respective slave nodes corresponding to the master node based on the displacement of the master node, the method further comprises: determining whether a working condition is a non-temperature working condition or a temperature working condition;

> if the working condition is determined to be a non-temperature working condition, calculating the displacements of the respective slave nodes corresponding to the master node based on the displacement of the master node using the following formula:

$$d' = d \times a$$

> wherein d is the displacement of the master node, d' is the displacements of the slave nodes corresponding to the master node, and a is a transformation matrix for transforming the displacement of the master node to the displacements of the slave nodes;
> if the working condition is determined to be a temperature working condition, calculating the displacements of the respective slave nodes corresponding to the master node based on the displacement of the master node using the following formula:

$$d' = d \times (a \times (1 + alf))$$

> wherein alf is a thermal expansion coefficient of a pipeline material.

7. A mechanics analysis method for a pipeline with a special-shaped pipe section, comprising: calculating the stresses of the respective shell elements and the stresses of the respective pipe-beam elements according to the method of any one of claims 1 to 6, and
assessing a stress of the pipeline with the special-shaped pipe section according to the stresses of the respective shell elements and the stresses of the respective pipe-beam elements.

8. A mechanics calculation apparatus for a pipeline with a special-shaped pipe section, comprising:

> a pipe-beam generation module configured to generate, according to parameter information of all components in the pipeline, a pipe-beam model formed by connecting a plurality of pipe-beam elements, and node information of the respective pipe-beam elements, wherein the components correspond to the pipe-beam elements in a one-to-one manner;
> a shell generation module configured to acquire meshing information of the special-shaped pipe section requiring detailed analysis, and node information of the special-shaped pipe section in the pipe-beam model, and generating a mesh model of the special-shaped pipe section formed by joining a plurality of shell elements, and mesh node information in the mesh model;
> a replacement module configured to replace, with the mesh model of the special-shaped pipe section, a pipe-beam element at a corresponding position in the pipe-beam model to form a hybrid model;
> a shell parameter formation module configured to calculate a material density of the special-shaped pipe section and replace a linear density in the parameter information of the special-shaped pipe section, so as to form updated parameter information of the special-shaped pipe section;
> a finite element calculation module configured to perform, according to working condition information of a pipeline to be calculated and the parameter information of the respective components in the pipeline, finite element calculation on the hybrid model to obtain a displacement of each node of the hybrid model, calculate nodal internal forces of the pipe-beam elements based on nodal displacements of the pipe-beam elements, and calculate stresses of the respective shell elements based on mesh nodal displacements of the mesh model of the special-shaped pipe section; and

a stress calculation module configured to calculate stresses of the pipe-beam elements based on the nodal internal forces of the pipe-beam elements.

9. The mechanics calculation apparatus of claim 8, further comprising: an interface module configured to receive the working condition information of the pipeline to be calculated and the parameter information of the respective components, and transmit the working condition information of the pipeline to be calculated and the parameter information of the respective components to the pipe-beam generation module and the finite element calculation module, and further transmit the parameter information of the special-shaped pipe section to the shell generation module and the shell parameter formation module; and

the interface module is further configured to receive serial number information and meshing information of the special-shaped pipe section and transmit the serial number information and the meshing information of the special-shaped pipe section to the shell generation module, and further transmit the serial number information of the special-shaped pipe section to the shell parameter formation module.

10. The mechanics calculation apparatus of claim 9, wherein the special-shaped pipe section comprises a pipe bend, the shell parameter formation module calculates a material density of the pipe bend, specifically comprising:

determining, according to a linear density $w_a$ of the pipe bend, a theoretical material density $w_a'$ of the pipe bend by a formula: $w_a' = w_a/g_a/t_a$, wherein the pipe bend is divided in a circumferential direction such that an end face circle forms N segments of circular arcs, $g_a$ is a length of each of the circular arcs, $g_a = \pi D_a/N$, $t_a$ is a wall thickness of the pipe bend, and $D_a$ is a pipe diameter of the pipe bend;

calculating an annular equivalent density factor $fac_a$ of the pipe bend according to a number of segments of the pipe bend divided in the circumferential direction by a formula: $fac_a = g_a/g_a'$, wherein $g_a'$ is a length of a foldline corresponding to each of the circular arcs after the pipe bend is divided in the circumferential direction, $g_a' = 2 D_a \times \sin (180/N)$;

calculating an axial equivalent density factor $fac_a'$ of the pipe bend according to a number of segments of the pipe bend divided in an axial direction, wherein after the pipe bend is divided in the axial direction, n pipe bend segments are formed, a length of a connecting line between center points of a start end face and a tail end face of each pipe bend segment is set as L, wherein $L = 2R \times \sin (\beta/2n)$, R is a bending radius of the pipe bend, $\beta$ is a turning angle of the pipe bend, a circumference of an ellipse of a cross section where an axial midpoint of each pipe bend segment is located is set as 1, wherein a length of a major axis of the ellipse of the cross section is a = r, a length of a minor axis of the ellipse of the cross section is $b = r \times \cos (\beta/2n)$, and a calculation formula for the axial equivalent density factor $fac_a'$ is: $fac_a' = s/(n \times L \times 1)$, wherein s is a surface area of the pipe bend; and

calculating a material density $w_a''$ of the pipe bend according to the following formula:

$$w_a'' = w_a' \times fac_a \times fac_a'.$$

11. The mechanics calculation apparatus of claim 9, wherein the special-shaped pipe section comprises a tee, parameter information of the tee comprises:

the shell parameter formation module is further electrically connected to the shell generation module, and is configured to calculate a material density of the tee, specifically comprising:

determining, according to a linear density $w_b$ of a main pipe or a branch pipe, a theoretical material density $w_b'$ of the main pipe or the branch pipe by a calculation formula: $w_b' = w_b/g_b/t_b$, wherein the main pipe or the branch pipe is divided in a circumferential direction such that an end face circle forms a plurality of circular arcs, $g_b$ is a length of each of the circular arcs, $t_b$ is a wall thickness of the main pipe or the branch pipe;

calculating, according to areas of the main pipe or the branch pipe before and after replacement by a main pipe model or a branch pipe model, an area equivalent factor $fac_b$ of the main pipe or the branch pipe by a calculation formula: $fac_b = A/A'$,

wherein A is an area calculated before replacement by the main pipe model or the branch pipe model without considering a loss or excess of the area, wherein $A = \pi \times D_b \times L_b$, $D_b$ is a pipe diameter of the main pipe or the branch pipe, $L_b$ is a length of a connecting line from a center of an end circle of the main pipe or the branch pipe to an intersection point of central axes of three pipes of the tee,

A' is an area calculated after replacement by the main pipe model or the branch pipe model considering the loss or excess of the area, wherein A' is specifically a sum of the areas of the shell elements of the main pipe or the branch pipe calculated according to the mesh node information of the main pipe or the branch pipe in the mesh model; and calculating a material density of the main pipe or the branch pipe according to the following formula:

$$\overline{w_b''} = w_b' \times fac_b.$$

12. The mechanics calculation apparatus of claim 9, wherein the special-shaped pipe section comprises a tapered pipe, the shell parameter formation module is further electrically connected to the shell generation module, and is configured to calculate a material density of the tee, specifically comprising:
calculating a material density of the tapered pipe, specifically comprising:

calculating a weight of the tapered pipe $W = w_c \times L_c$;
calculating an average wall thickness of the tapered pipe by a calculation formula $t_c = (T + t)/2$, wherein T is a wall thickness of a large end of the tapered pipe, t is a wall thickness of a small end of the tapered pipe;
calculating a surface area of the tapered pipe after meshing by a calculation formula:

$$A_c = (R_c + r_c)\sin(360/2N) \times \sqrt{((R_c - r_c)\cos\left(\tfrac{360}{2N}\right))^2 + L_c^2} \times N_c,$$

wherein $R_c$ is a radius of the large end of the tapered pipe, $r_c$ is a radius of the small end of the tapered pipe, $L_c$ is a length of the tapered pipe, and $N_c$ is a number of segments of the tapered pipe divided in the circumferential direction;
calculating, according to the average wall thickness of the tapered pipe and the surface area of the tapered pipe after meshing, a volume of the tapered pipe: $V = A_c \times t_c$; and
calculating a material density $w_c'$ of the tapered pipe according to the following formula:

$$w_c' = W/V.$$

13. The mechanics calculation apparatus of any one of claims 8-12, wherein,

the shell parameter formation module comprises a material density calculation module and a parameter update module,
the shell parameter formation module is electrically connected to the interface module, and is configured to determine, according to the linear density of the special-shaped pipe section, a material density of the special-shaped pipe section, and
the parameter update module is electrically connected to the material density calculation module, and is configured to replace the linear density in the parameter information of the special-shaped pipe section with the material density of the special-shaped pipe section to form updated parameter information of the special-shaped pipe section.

14. The mechanics calculation apparatus of any one of claims 8-12,

wherein a node of a pipe-beam element at a connection between the mesh model of the special-shaped pipe section and the pipe-beam element is set as a master node, and nodes of the mesh model of the special-shaped pipe section at the connection between the mesh model of the special-shaped pipe section and the pipe-beam element corresponding to the master node are set as slave nodes,
the finite element calculation module comprises a total nodal displacement calculation module, a mesh nodal displacement formation module, a beam element internal force calculation module, and a shell element stress calculation module,
wherein the total nodal displacement calculation module is configured to perform finite element calculation on the hybrid model to obtain the a displacement of each node of the hybrid model, comprising: calculating only a displacement of the master node at the connection between the mesh model of the special-shaped pipe section and the pipe-beam element;

the mesh nodal displacement formation module is electrically connected to the total nodal displacement calculation module, and is configured to calculate the displacements of the respective slave nodes corresponding to the master node based on the displacement of the master node, and is further configured to aggregate the displacements of the respective slave nodes and displacements of other mesh nodes of the mesh model of the special-shaped pipe section obtained in the finite element calculation to constitute the mesh nodal displacements of the mesh model of the special-shaped pipe section;

the beam element internal force calculation module is electrically connected to the total nodal displacement calculation module, and is configured to calculate a nodal internal force of the pipe-beam element based on a nodal displacement of the pipe-beam element; and

the shell element stress calculation module is electrically connected to the mesh nodal displacement formation module, and is configured to calculate the stresses of the respective shell elements based on the mesh nodal displacements of the mesh model of the special-shaped pipe section.

15. The mechanics calculation apparatus of claim 14, wherein the finite element calculation module further comprises a determination module, which is electrically connected between the interface module and the mesh nodal displacement formation module, and is configured to determine whether a working condition is a non-temperature working condition or a temperature working condition;

if the working condition is determined to be a non-temperature working condition, the mesh nodal displacement formation module is triggered to calculate the displacements of the respective slave nodes corresponding to the master node based on the displacement of the master node using the following formula:

$$d'=d \times a$$

wherein d is the displacement of the master node, d' is the displacements of the slave nodes corresponding to the master node, and a is a transformation matrix for transforming the displacement of the master node to the displacements of the slave nodes;

if the working condition is determined to be a temperature working condition, the mesh nodal displacement formation module is triggered to calculate the displacements of the respective slave nodes corresponding to the master node based on the displacement of the master node using the following formula:

$$d' = d \times (a \times (1+ alf))$$

wherein alf is a thermal expansion coefficient of the pipeline material.

16. The mechanics calculation apparatus of claim 14, wherein

the mesh nodal displacement formation module comprises a shell slave nodal displacement calculation module and a shell nodal displacement summary module,

the shell slave nodal displacement calculation module is electrically connected to the total nodal displacement calculation module, and is configured to calculate the displacements of the respective slave nodes corresponding to the master node based on the displacement of the master node; the shell nodal displacement summary module is electrically connected to the shell slave nodal displacement calculation module and the total nodal displacement calculation module, and is configured to aggregate the displacements of the respective slave nodes and displacements of other mesh nodes of the mesh model of the special-shaped pipe section obtained in the finite element calculation to constitute the mesh nodal displacements of the mesh model of the special-shaped pipe section.

17. A mechanics analysis apparatus for a pipeline with a special-shaped pipe section, comprising the apparatus of any one of claims 8 to 16, and a stress assessment module,

wherein the stress assessment module is electrically connected to the finite element calculation module and the stress calculation module of the mechanics calculation apparatus, and is configured to assess a stress of the pipeline with a special-shaped pipe section according to the stresses of the respective shell elements and the stresses of the respective pipe-beam elements.

FIG. 1

EP 4 625 237 A1

FIG. 2

FIG. 3

FIG. 4

FIG. 5

FIG. 6

FIG. 7

FIG. 8

Pipe beam generation module — 1

Shell generation module — 2

Interface module — 7

Material density calculation module — 61

Shell parameter update module — 62

6

Replacement module — 3

Total nodal displacement calculation module — 41

Shell slave nodal displacement calculation module — 421

Shell nodal displacement summary module — 422

Shell element stress calculation module — 43

Beam element internal force calculation module — 44

Determination module — 45

4

42

Stress calculation module — 5

FIG. 9

FIG. 10

1: CREA,XZ=4.5375*304.8

2: RSHL,LX=1,YZ=20,ZX=15,MC=SMALL PIPE SHELL 1

3: ****** straight pipe, divided into 20X15 shell elements **********

4: CREA,XZ=4.5375*304.8

5: RSHL,LX=1,YZ=20,ZX=15,MC=SMALL PIPE SHELL 2

6: *****************************************

7: BREL,XZ=(1.253+0.886+0.886)*304.8

8: RSHL,LX=2,YZ=20,ZX=30,MC=SMALL PIPE SHELL 3

9: *****************************************

FIG. 11

## INTERNATIONAL SEARCH REPORT

| International application No. |
| --- |
| **PCT/CN2022/135739** |

| A. | CLASSIFICATION OF SUBJECT MATTER |
| --- | --- |

G06F30/23(2020.01)i; G06F30/18(2020.01)i; G06F113/14(2020.01)i; G06F119/14(2020.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, CNKI, ENTXTC, DWPI: 异型, 管段, 弯管, 三通, 锥管, 力学, 建模, 计算, 管道梁, 模型, 网格, 节点, 壳单元, 位移, 应力, 有限元, 材料密度, 线密度, 换算, 替换, deformed, special, shaped, pipe+, beam, grid, node, shell, unit, displacement, model, section, stress, replac+, linear, density

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 110705169 A (POWERCHINA CHENGDU ENGINEERING CORPORATION LIMITED) 17 January 2020 (2020-01-17) description, paragraphs [0035]-[0062], and figures 1-8 | 1-17 |
| A | CN 101826117 A (CHINA NUCLEAR POWER ENGINEERING CO., LTD.) 08 September 2010 (2010-09-08) entire document | 1-17 |
| A | CN 102819632 A (SUZHOU INDUSTRIAL PARK DESIGN & RESEARCH INSTITUTE CO., LTD.) 12 December 2012 (2012-12-12) entire document | 1-17 |
| A | CN 106021644 A (NORTHWESTERN POLYTECHNICAL UNIVERSITY) 12 October 2016 (2016-10-12) entire document | 1-17 |
| A | CN 111209038 A (CHINA NUCLEAR POWER ENGINEERING CO., LTD. et al.) 29 May 2020 (2020-05-29) entire document | 1-17 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 August 2023** | **16 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/135739**

**C.    DOCUMENTS CONSIDERED TO BE RELEVANT**

| Category* | Citation of document, with indication, where appropriate, of the relevant passages | Relevant to claim No. |
|---|---|---|
| A | CN 111428403 A (HUANGGANG NORMAL COLLEGE et al.) 17 July 2020 (2020-07-17)<br>entire document | 1-17 |
| A | CN 115329619 A (CHINA NUCLEAR POWER ENGINEERING CO., LTD.) 11 November 2022 (2022-11-11)<br>entire document | 1-17 |
| A | JP 2008108242 A (TORAY INDUSTRIES, INC.) 08 May 2008 (2008-05-08)<br>entire document | 1-17 |
| A | 高琦等 (GAO, Qi et al.). "高钢级天然气管道站场三通孔锥形坡口优化分析 (Optimization Analysis of Hole Taper Groove Tee in High Steel Grade Natural Gas Pipeline Station)"<br>*石油化工设备 (Petro-Chemical Equipment)*,<br>Vol. 51, No. 1, 31 January 2022 (2022-01-31), 34-39, 72<br>ISSN: 1000-7466,<br>entire document | 1-17 |

Form PCT/ISA/210 (second sheet) (July 2022)

## INTERNATIONAL SEARCH REPORT
### Information on patent family members

| International application No. |
| --- |
| **PCT/CN2022/135739** |

| Patent document cited in search report | | | Publication date (day/month/year) | Patent family member(s) | | | Publication date (day/month/year) |
| --- | --- | --- | --- | --- | --- | --- | --- |
| CN | 110705169 | A | 17 January 2020 | None | | | |
| CN | 101826117 | A | 08 September 2010 | CN | 101826117 | B | 28 December 2011 |
| CN | 102819632 | A | 12 December 2012 | None | | | |
| CN | 106021644 | A | 12 October 2016 | CN | 106021644 | B | 26 February 2019 |
| CN | 111209038 | A | 29 May 2020 | None | | | |
| CN | 111428403 | A | 17 July 2020 | CN | 111428403 | B | 14 June 2022 |
| CN | 115329619 | A | 11 November 2022 | None | | | |
| JP | 2008108242 | A | 08 May 2008 | None | | | |

Form PCT/ISA/210 (patent family annex) (July 2022)

**EP 4 625 237 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211472307